# EUROPÄISCHE PATENTSCHRIFT

(11) **EP 2 432 735 B1**
(45) Veröffentlichungstag und Bekanntmachung des Hinweises auf die Patenterteilung: **11.09.2013**
(21) Anmeldenummer: 10725013.6
(22) Anmeldetag: 18.05.2010
(51) Int. Cl.: C01G 19/00

(54) **ZUSAMMENSETZUNG UND VERFAHREN ZUR HERSTELLUNG VON ITO-PULVERN ODER ITO-BESCHICHTUNGEN**
COMPOSITION AND METHOD FOR PRODUCING ITO POWDERS OR ITO COATINGS
COMPOSITION ET PROCÉDÉ POUR LA FABRICATION DE POUDRES D'ITO OU DE REVÊTEMENTS D'ITO

(30) Priorität: 20.05.2009 DE 102009022097
(43) Veröffentlichungstag der Anmeldung: 28.03.2012
(73) Patentinhaber: Leibniz-Institut für Neue Materialien gemeinnützige GmbH, 66123 Saarbrücken (DE)
(72) Erfinder: BUBEL, Carsten, 81929 München (DE); VEITH, Michael, 66386 St.-Ingbert (DE); OLIVEIRA, Peter, William, de, 66111 Saarbrücken (DE)
(74) Vertreter: Gierlich, Johannes
(86) Internationale Anmeldenummer: PCT/EP2010/003002
(87) Internationale Veröffentlichungsnummer: WO 2010/133327

(56) Entgegenhaltungen:
- WO-A1-2008/113632
- VEITH M ET AL: "One-dimensional arrangements of metal atoms in transition metal carbonyl complexes of mixed main group metal alkoxides" COORDINATION CHEMISTRY REVIEWS, ELSEVIER SCIENCE, AMSTERDAM, NL, Bd. 137, 1. Dezember 1994 (1994-12-01), Seiten 297-322, XP009098231 ISSN: 0010-8545
- VEITH M ET AL: "Synthese und Charakterisierung von InIII-SnII-Halogenido-Alkoxide und von Indiumtri-tert-butoxid" ZEITSCHRIFT FUR ANORGANISCHE UND ALLGEMEINE CHEMIE, WILEY - V C H VERLAG GMBH & CO. KGAA, DE LNKD- DOI:10.1002/1521-3749(200107)627:7<1495::A ID-ZAAC1495>3.0.CO;2-U, Bd. 627, 1. Januar 2001 (2001-01-01), Seiten 1495-1504, XP002475152 ISSN: 0044-2313

## Beschreibung

### Gebiet der Erfindung

Die Erfindung betrifft eine Zusammensetzung und ein Verfahren zur Herstellung von ITO-Pulvern oder ITO-Beschichtungen, insbesondere Zusammensetzungen, welche auf sogenannten Single-Source-Precursoren beruhen.

### Stand der Technik

Trotz der intensiven Forschungsarbeiten der letzten Jahrzehnte und der ständig wachsenden Bedeutung von ITO für industrielle Anwendungen sind immer noch wesentliche theoretische und technische Probleme nicht gelöst. So ist zwar die Optimierung der elektrischen Eigenschaften des Materials durch aufwendige Verfahren weit fortgeschritten, die genauen Leitfähigkeitsmechanismen dieses degenerierten n-Halbleiters bleiben jedoch weiterhin unklar, was besonders auf die Rolle und Funktion des eingebrachten Zinn zutrifft.

Desweiteren mangelt es den heutigen Techniken häufig an der Reproduzierbarkeit und der Homogenität der Schichten. Besonders die Effektivität des Dotiermittels (Zinn) ist unzureichend, da große Teile des überschüssig eingebrachten Zinn nicht zur Leitfähigkeit der Schicht beitragen oder sogar durch Clusterbildung (z.B. an Korngrenzen) Streuzentren bilden, welche die elektrischen Eigenschaften des Materials mindern.

Der heutzutage am meisten angewandte Prozess der ITO-Auftragung ist das sogenannte Sputtern, mit dem sich Schichten mit der besten optischen und elektrischen Qualität herstellen lassen. Hierfür werden jedoch kostspielige und aufwendige Vakuumapparaturen benötigt, welche die verwendeten Substrate (Glas, Polymer) in ihrer Größe und Form technisch bedingt einschränken und einen kontinuierlichen Beschichtungsprozess verhindern.

Alternativ zum Sputterverfahren bietet der Sol-Gel-Prozess eine größere Flexibilität bezüglich der Substratgröße und -Form (Dip-Coating, Spin-Coating, Sprühtechniken). Zudem können die Schichtparameter durch Variation der Lösungszusammensetzung gezielt eingestellt werden. Gleichzeitig besteht auch die Möglichkeit, das ITO in Pulverform herzustellen, das als Ausgangsprodukt für dispersionsbasierte Sole verwendet werden kann.

Bei ITO-Sol-Gel-Schichten spielt die Zusammensetzung der Beschichtungslösung eine entscheidende Rolle. Hierfür werden meist die Alkoxide oder Halogenide der Metalle Indium und Zinn in passenden stöchiometrischen Anteilen in einem (meist alkoholischen) Solvent gelöst und mit Additiven versehen. Diese sorgen unter anderem für eine gleichmäßige Schichtaufbringung auf dem Substrat. Die Löslichkeit der Indium- und der Zinnvorstufen ist dabei meist molekülbedingt unterschiedlich, so dass eine homogene Durchmischung beider Komponenten problematisch ist und unter Umständen nur durch die Zugabe weiterer Additive (anderes Solvent) gewährleistet werden kann.

Beim Auftragen der Lösung auf dem Substrat hydrolysieren und kondensieren die beiden Metallkomponenten unter Abspaltung der organischen oder der Halogenidliganden. Es bildet sich ein sogenanntes Xerogel. Dabei kann es aufgrund der unterschiedlichen Hydrolyseneigung der beiden Komponenten zu Phasenseparationen bzw. einer unzureichend homogenen Verteilung des Zinn in dem Indiumhaltigen Netzwerk kommen, die auch nur zum Teil durch intensive und lange Temperprozesse diffusionsgesteuert aufgehoben werden können.

In dem Xerogel sind noch immer große Teile an organischem Material vorhanden (Solvent, Alkoholreste etc.). Diese werde in der anschließenden Temperaturbehandlung entfernt (herausgebrannt). Ähnliches gilt für die äquivalenten Metallhalogenide, bei denen der abgespaltene Halogenidligand während der Temperaturbehandlung zumindest teilweise aus dem Schichtmaterial entfernt wird.

Um ausreichende elektrische Leitfähigkeitswerte zu erreichen, sind für die Herstellung von ITO-Sol-Gel-Schichten zwei Temperschritte notwendig:
- Auskristallisieren des Xerogels an Luft, bei dem auch verbleibende organische oder halogenidhaltige Reste bei hohen Temperaturen (meistens ca. 500 °C) herausgebrannt werden (Calcinierung).
- Reduzieren des Materials zur Erzeugung der erforderlichen Leitfähigkeit.

Dieser zweistufige Prozess hat einige Nachteile. So müssen die eingebrachten Fremdatome durch die Calcinierung entfernt werden. Dies stellt insbesondere bei der Verwendung von Halogenidverbindungen ein Problem dar. Diese Fremdatome reduzieren die Reinheit der erhaltenen ITO-Beschichtungen. Gleichzeitig wird unter diesen Bedingungen das Zinn zu Sn(IV) oxidiert.

Der zweite Schritt geschieht in einer reduzierenden Atmosphäre (H₂, CO) bei erhöhter Temperatur (>300°C). Dadurch werden Sauerstoffleerstellen in dem Oxidgitter erzeugt. Gleichzeitig werden die Metallkationen reduziert (In^{III} → In^{I} → In⁰; Sn^{IV} → Sn^{II} → Sn⁰).

Durch die so entstandenen Sauerstoffleerstellen und den vorherigen Einbau von Sn⁴⁺- Kationen erhält das Material seine leitfähigen Eigenschaften und die reflektierenden Eigenschaften im infraroten Spektralbereich.

Bei der Herstellung von ITO-Schichten (und -Pulvern) über den Sol-Gel-Prozess sind einige prozessbedingte Probleme zu bewältigen.

Diese beinhalten unter anderem die vollständige Auflösung und Durchmischung der beiden Metallvorstufen (Alkoxide, Halogenide) in dem vorgegebenen Solvent (z.B. Isopropanol), um eine homogene Zusammensetzung zu erhalten.

Im eigentlichen Schritt des Sol-Gel-Prozesses kann es zu Phasenseparationen bzw. unzureichenden Durchmischungen der (hydrolysierten) Ausgangsmaterialien aufgrund von unterschiedlichen Hydrolyse- und Kondensationsneigungen kommen.

Die anschließenden Temperaturbehandlungen müssen in zwei Stufen durchgeführt werden (Kristallisation und Reduktion).

Im Reduktionsschritt ist weiterhin darauf zu achten, dass das Material nicht zu viel und zu lange reduziert wird und die Metalle somit elementar vorliegen und die Schicht schwärzen ("Überreduktion").

Die vorstehend beschriebenen Herstellungsverfahren für ITO-Schichten arbeiten alle nach dem Standardprinzip für ITO. Um eine optisch transparente und elektrisch leitfähige ITO-Schicht zu erhalten, muss ein kristallines Indiumoxidgitter vorgegeben werden, in welchem durch den Einbau von Sn⁴⁺-Ionen und einem anschließenden Reduktionsschritt (Bildung von Sauerstoffleerstellen) freie Elektronen zum Ladungstransport zur Verfügung gestellt werden. Dieser Reduktionsschritt erfolgt durch Temperung in einer reduzierenden Atmosphäre (N₂/H₂).

Bisweilen werden in der Literatur auch Temperungen unter Inertgasatmosphäre beschrieben. Dabei werden jedoch ausschließlich Sn(IV)-Edukte verwendet, oder die verwendeten Sn(II)-Edukte wurden zuvor durch Temperung unter oxidierender Atmosphäre (Luft) zu Sn(IV) umgewandelt. Der vorherrschende Effekt, der die gestiegene Leitfähigkeit erklärt, liegt also lediglich in der Bildung von Sauerstoffleerstellen durch den geringen Sauerstoffpartialdruck bei der Temperung unter Inertgas. Eine Änderung der Wertigkeit des Zinn kann nicht mehr eintreten, da es bereits in seiner stabilsten Form Sn^{IV} vorliegt und keine reduzierenden Bedingungen herrschen.

Um auch temperaturempfindliche Substrate beschichten zu können, geht ein anderer Ansatz von ITO-Pulvern aus, welche in eine Polymermatrix eingebettet werden. Dies erlaubt die Härtung bei moderaten Temperaturen. Die Herstellung solcher Pulver erfolgt meistens mittels Sol-Gel- oder Präzipitationstechniken.

In WO 2008/113632 A1 wird die Herstellung von ITO-Schichten aus Carbonylkomplexen beschrieben. Auch in Veith M et al. Coord. Chem. Rev. 1994, 137, 297-322 werden Carbonylkomplexe von Indium und Zinn beschrieben.

In Veith M. et al. Z. anorg. allgr. Chem. 2001, 627, 1495-1504 werden Alkoxidverbindung von Indium und Zinn beschrieben.

### Aufgabe

Aufgabe der Erfindung ist es eine Zusammensetzung anzugeben, welche die vorstehend angegebenen Probleme des Standes der Technik überwindet, insbesondere die unzureichende Durchmischung und der Phasenseparation der Komponenten in der Zusammensetzung oder im Xerogel. Außerdem ist es Aufgabe der Erfindung ein Verfahren zur Herstellung von ITO-Beschichtungen und ITO-Pulver anzugeben.

### Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindung umfasst auch alle sinnvollen und insbesondere alle erwähnten Kombinationen von unabhängigen und/oder abhängigen Ansprüchen.

Die Aufgabe wird durch eine Zusammensetzung zur Herstellung von ITO-Pulvern oder ITO-Beschichtungen, enthaltend
a) mindestens eine Indium-Verbindung; und
b) mindestens eine bimetallische Verbindung, welche Indium- und Zinn enthält, gelöst.

Eine solche Zusammensetzung weist gleich in mehrfacher Hinsicht vorteilhafte Eigenschaften auf. So vermeidet die Zusammensetzung Mischungsprobleme der Indium-Verbindung und der Zinn-Verbindung. Das für die Dotierung benötigte Zinn kann entsprechend dem Anteil an der bimetallischen Verbindung gesteuert werden. Durch die Verwendung einer bimetallischen Verbindung wird auch gewährleistet, dass das Zinn bzw. die Zinnionen direkt in das Indiumoxidgitter eingebaut werden. Dadurch wird die Bildung von Clustern von Zinn vermieden.

In einer bevorzugten Ausführungsform liegt das Zinn in der bimetallischen Verbindung in der Oxidationsstufe +2 vor. Bei herkömmlichen Verfahrenstechniken wird das Zinn entweder direkt in seiner stabilsten Wertigkeit Sn⁴⁺ verwendet (z.B. SnCl₄), oder es erfolgt eine Umwandlung von der metastabilen Phase Sn²⁺ zu Sn⁴⁺ während der Kristallisation im Luftofen. In beiden Fällen liegt das Zinn im Oxidgitter vierwertig vor (SnO₂). Zur Gewährleistung der Ladungsträgerneutralität (substitutioneller Einbau von Sn⁴⁺ auf In³⁺-Positionen) wird zusätzlicher Sauerstoff auf Zwischengitterplätze eingebaut, der im nachfolgenden Reduktionsschritt teilweise wieder entfernt wird. Während dieses Reduktionsschrittes wird auch das Sn⁴⁺ weiter reduziert zu Sn²⁺ oder auch zu Sn⁰ .

Zweiwertiges Zinn dagegen disproportioniert bei Temperaturen von über 300 °C gemäß der folgenden Gleichung:

2 SnO <--> Sn⁰ + SnO₂

Diese Reaktion findet unter inerter Atmosphäre statt. Man erhält dadurch eine ähnliche Verteilung der Wertigkeit der Zinnionen im Indiumoxid wie bei bekannten ITO-Herstellungsprozessen, wobei jedoch nur ein Temperschritt notwendig ist und die Verwendung explosiver oder toxischer Gase (H₂, CO) vermieden wird. Das entstandene metallische Sn⁰ liegt dabei nicht segregiert als zusätzliche Phase vor, sondern ist homogen und ohne Clusterbildung im Oxidmaterial verteilt. Desweiteren entfällt durch diese Technik der Einbau von interstitiellem Sauerstoff zum Erlangen der Ladungsträgerneutralität und seine anschließende Entfernung oder er wird zumindest überwiegend vermindert.

Die erfindungsgemäße Zusammensetzung kann allerdings ebenso in dem bereits beschriebenen zweistufigen Prozess (Calcinierung, Reduktion) behandelt werden. Auch nach diesem Prozess erhält man hochwertige ITO-Beschichtungen oder ITO-Pulver.

Als Indium-Verbindung werden Verbindung der Formel InR¹₃ verwendet, wobei R¹ gleich oder verschieden sein können. R¹ ist ausgewählt aus der Gruppe enthaltend geradkettige oder verzweigte Alkyl, Alkoxy und Carboxylreste, Halogenide, Amine, alkylierte Amine. Die Reste können auch untereinander verbunden sein, was zur Ausbildung von cyclischen Verbindungen führt, wie z.B. durch Chelatliganden (Ethandiol, Propandiol oder Ether dieser Verbindungen) oder Liganden, welche das Metallzentrum intramolekular stabilisieren können, wie z.B. Alkyl-Reste mit Hydroxylgruppen oder Ethergruppen.

Die bimetallische Verbindung zeichnet sich dadurch aus, dass die beiden Metallzentren in einem Molekül vorliegen. Dadurch liegen die beiden Metallionen in einem festen Verhältnis vor. Die Verbindungen zwischen den Metallzentren können kovalent sein, beispielsweise durch verbrückende Liganden. Sie können aber auch ionisch oder koordinativ sein, d.h. beispielsweise durch Koordination eines Elektronendonors wie Sauerstoff an ein Metallzentrum.

Die bimetallische Verbindung ist eine Koordinationsverbindung einer Zinn-Verbindung mit einer Indium-Verbindung. Dies bedeutet, dass die bimetallische Verbindung durch Koordination einer Zinn-Verbindung mit einer Indium-Verbindung gebildet wird. Indium(III)-Verbindungen sind wie die meisten dreiwertigen Verbindungen der Gruppe 13 Elektronenmangelverbindungen. Die Elektronenlücke am Metall kann durch Ausbildung von Mehrzentrenbindungen aber auch durch die Bildung von Addukten mit Lewis-Basen (Elektronendonoren) geschlossen werden. Die Wahl der Reste am Indium ermöglicht dabei durch Wahl der sterischen Ausdehnung und der elektronischen Eigenschaften eine genaue Steuerung der Stabilität solcher Addukte.

Auch Zinn-Verbindungen, insbesondere auch Sn(II)-Verbindungen, können solche koordinativen Bindungen eingehen.

Um eine solche Koordinationsverbindung aus einer Zinn- und einer Indium-Verbindung zu erhalten, weist jede der Verbindungen vorzugsweise lewisbasische Gruppen (X) auf, welche eine koordinative Bindung zum jeweilig anderen Metallzentrum eingehen:

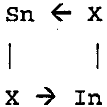

Dabei können die lewisbasischen Gruppen X auch über mehrere Bindungen mit dem Metallzentrum verbunden sein. Bevorzugt ist eine direkte Bindung der lewisbasischen Gruppen an das Metallzentrum. X kann dabei O, N oder S sein, wobei O bevorzugt ist. Beispiele für X sind Alkoxygruppen mit 1 bis 8 C-Atomen, wie beispielsweise Methoxy, Ethoxy, Propoxy, Isopropoxy, Butoxy, tert.-Butoxygruppen.

Die Koordinationsverbindung kann auch im Gleichgewicht mit der Zinn-Verbindung und der Indium-Verbindung vorliegen. Durch die Wahl der Liganden und der meistens im hohen Überschuss vorliegenden Indium-Verbindung ist das Gleichgewicht allerdings auf der Seite der Komplexverbindung verschoben.

Das Molekulargewicht der bimetallischen Verbindung liegt bevorzugt unter 2000 g/mol, besonders bevorzugt unter 1000 g/mol, aber über 350 g/mol, bevorzugt über 500 g/mol.

Mit Vorteil weist die bimetallische Verbindung ein Verhältnis von In- und Sn-Atomen von 1:1 auf. Mit Vorteil enthält die Komplexverbindung genau ein In- und ein Sn-Atom.

Trotz des Gleichgewichts kann die Koordinationsverbindung durch experimentelle Messungen, wie NMR-Messungen einwandfrei charakterisiert werden.

In einer weiteren Weiterbildung sind die Indium-Verbindungen Verbindungen der Formel I

R²₂InR³ (I)

wobei R² ausgewählt sind aus der Gruppe enthaltend geradkettige oder verzweigte Alkyle, bevorzugt mit 1 bis 8 C-Atomen, besonders bevorzugt Methyl, Ethyl, Propyl, Butyl, Isopropyl, Alkenylgruppen mit 1 bis 8 C-Atomen und Arylgruppen wie Phenyl. R³ ist ein Ligand, welcher über ein Heteroatom wie O, N oder S mit dem Indium verbunden ist, wie Alkoxygruppen, Alkylamine, Phenoxy oder Carboxylgruppen. Bevorzugt sind Alkoxygruppen, welche allerdings noch weitere Heteroatome enthalten können. Besonders bevorzugt sind C₁-C₁₂-Alkoxygruppen, wie Methoxy, Ethoxy, Propoxy, iso-Propoxy, n-Butoxy, tert.-Butoxy, Pentoxy, Neopentoxy. Bevorzugt ist die Indium-Verbindung als Dialkylindiumverbindung, insbesondere mit einem weiteren Rest, welcher über mindestens eine lewisbasische Gruppe, wie z.B. eine Alkoxygruppe, verfügt.

Als Zinn-Verbindungen werden mit Vorteil Zinnverbindungen, welche mit Resten, welche über lewisbasischen Gruppen verfügen, verwendet. Bevorzugt sind Zinnhalogenide, Zinnalkoxide. Besonders bevorzugt sind Verbindung mit Zinn in der Oxidationsstufe +2. Dies sind insbesondere Verbindungen der Formel SnR³₂, wobei R³ wie vorstehend definiert ist, bevorzugt C₁-C₁₂-Alkoxygruppen, wie Methoxy, Ethoxy, Propoxy, iso-Propoxy, n-Butoxy, tert.-Butoxy, Pentoxy, Neopentoxy.

In einer vorteilhaften Weiterbildung wird die bimetallische Verbindung durch Reaktion einer Indium-Verbindung mit einer entsprechenden Zinn-Verbindung erhalten.

In einer besonders bevorzugten Weiterbildung entspricht die Indium-Verbindung zur Herstellung der bimetallischen Verbindung der Indium-Verbindung der erfindungsgemäßen Zusammensetzung. Dies erlaubt eine besonders einfache Herstellung einer Precursorzusammensetzung für eine Zusammensetzung zur Herstellung von ITO-Beschichtungen und ITO-Pulver. Dazu wird zu der Indium-Verbindung ein entsprechend der Dotierung gewählter Anteil an Zinn-Verbindung gegeben und durch Reaktion mit einem entsprechenden Teil der Indium-Verbindung die bimetallische Verbindung gebildet. Die erhaltene Mischung kann als homogene Mischung aufgereinigt und eingesetzt werden. Die Koordinationsverbindung bleibt dabei erhalten. Dadurch kann bei genau einstellbarem Gehalt an Zinn in der endgültigen ITO-Beschichtung eine gut handhabbare und weiterzuverarbeitende homogene Precursorzusammensetzung erhalten werden. Aus dieser Precursorzusammensetzung kann dann direkt oder nach Zugabe weiterer Verbindungen eine erfindungsgemäße Zusammensetzung zur Herstellung von ITO-Beschichtungen oder ITO-Pulvern erhalten werden. Falls nichts mehr hinzugegeben wird, entspricht die Precursorzusammensetzung einer erfindungsgemäßen Zusammensetzung.

In einer vorteilhaften Weiterbildung ist die Indium-Verbindung eine Verbindung der Formel II

R⁴₂InOR⁵ (II)

und die bimetallische Verbindung eine Verbindung der Formel III

R⁴₂In(OR⁵)³Sn (III)

wobei R⁴ und R⁵ gleich oder verschieden sind und für einen linearen oder verzweigten Alkyl-Rest mit 1 bis 8 C-Atomen stehen. Bevorzugt ist R⁴ Methyl, Ethyl, Propyl oder Butyl und R⁵ Propyl, n-Butyl oder tert.-Butyl.

Entsprechend der gewünschten Dotierung an Zinn weist die Zusammensetzung, bzw. die Precursorzusammensetzung einen Anteil von 1 bis 50 at% Zinn ([Sn]/([Sn]+[In])) auf, bevorzugt einen Bereich von 5 bis 30 at% Zinn, besonders bevorzugt zwischen 5 und 20 at% Zinn.

Die Indiumverbindung kann auch eine Indiumverbindung der Formel I sein, welche zusammen mit der bimetallischen Verbindung der Formel III verwendet wird.

In Formel III liegt Sn bevorzugt in der Oxidationsstufe +2 vor. In liegt bevorzugt in der Oxidationsstufe +3 vor.

In einer vorteilhaften Weiterbildung enthält die Zusammensetzung zusätzlich eine oder mehrere organische Verbindungen mit lewisbasischen Gruppen. Diese Gruppen dienen zum einen zur Stabilisierung der Precursorzusammensetzung bei der weiteren Verarbeitung, als auch zur Verbesserung der Eigenschaften der erhaltenen Pulver und Beschichtungen. Bevorzugt sind lewisbasische Gruppen, welche Sauerstoff enthalten. Der Anteil der Verbindungen kann so gewählt werden, dass eine erfindungsgemäße Zusammensetzung eine Konzentration von 0.1 bis 0.6 M der Precursorzusammensetzung bezogen auf die auf die Gesamtkonzentration aus Indium-Verbindung und bimetallischer Verbindung. Bevorzugt ist eine Konzentration von 0.15 bis 0.45 M.

Der Anteil einer solchen Verbindung an der Precursorzusammensetzung kann bei 10 bis 50 Vol-% liegen, bevorzugt sind 20-40 Vol-%.

Solche lewisbasischen Verbindungen können beispielsweise ausgewählt werden aus:
a. C₁₋₆-Alkohole wie Methanol, Ethanol, Propanol, iso-Propanol, n-Butanol, iso-Butanol,
b. Mono- und Polycarbonsäuren wie Ameisensäure, Essigsäure, Propionsäure, Buttersäure, Pentansäure, Hexansäure, Acrylsäure, Methacrylsäure, Crotonsäure, Citronensäure, Adipinsäure, Bernsteinsäure, Glutarsäure, Oxalsäure, Maleinsäure, Fumarsäure, Itaconsäure, Stearinsäure und insbesondere 3,6,9-Trioxadecansäure sowie die entsprechenden Anhydride,
c. Ketone, Diketone oder Hydroxyketone wie Acetylaceton, 2,4-Hexandion, 3,5-Heptandion, Acetessigsäure, Acetessigsäure-C₁-C₄-Alkylester wie Acetessigsäureethylester, Diacetyl und Acetonylaceton, β-Hydroxyketone, Diacetonalkohol,
d. Aminosäuren, insbesondere β-Alanin, aber auch Glycin, Valin, Aminocapronsäure, Leucin und Isoleucin,
e. Polyethylenoxid-Derivate, insbesondere Tween 80 (Sorbitanmonooleat-polyoxyalkylen), aber auch Emulsogen^{®} (Hexaglycolmonostearat), Emulsogen^{®} OG (Ölsäurederivat) und Brij^{®} 30 (Polyoxyethylenlaurylether),
f. Säureamide, insbesondere Caprolactam, und
g. Amine wie z. B. Methylamin, Dimethylamin. Trimethylamin, Anilin, N-Methylanilin, Diphenylamin, Triphenylamin, Toluidin, Ethylendiamin, Diethylentriamin.

Bevorzugt sind Verbindungen, welche neben Sauerstoff nur Kohlenstoff und Wasserstoff aufweisen, insbesondere C₁₋₆-Alkohole, Carbonylverbindungen, β-Hydroxyketone, β-Diketone, (Poly)ether, besonders bevorzugt β-Hydroxyketone wie Diacetonalkohol. Dies reduziert die Menge an eingebrachten Fremdatomen

Es können auch Mischungen der Verbindungen eingesetzt werden, z.B. Mischungen aus Alkoholen und β-Hydroxyketonen.

Zusätzlich zu diesen Verbindungen kann die Zusammensetzung noch weitere Lösungsmittel und/oder andere Verbindungen enthalten. Denkbar sind beispielsweise weitere Lösungsmittel wie Diethylether, Tetrahydrofuran, aber auch inerte Lösungsmittel wie Toluol, Benzol, Pentan.

Die Erfindung betrifft außerdem einen bimetallischen Precursor, insbesondere zur Herstellung von ITO-Beschichtungen und ITO-Pulvern, der Koordinationsverbindung einer Indium- und einer Zinn-Verbindung ist und Zinn der Oxidationsstufe +2 enthält.

Ein solcher bimetallischer Precursor ist insbesondere erhältlich durch Reaktion einer Indium-Verbindung mit mindestens einer lewisbasischen Gruppe, bevorzugt einer Indiumverbindung der Formel I, besonders bevorzugt einer Indiumverbindung der Formel II, und einer Zinn-Verbindung der Formel Sn(OR)₂, wobei R wie R⁵ in Formel III definiert ist.

Bevorzugt ist der bimetallische Precursor wie die bimetallische Verbindung der erfindungsgemäßen Zusammensetzung definiert. Besonders bevorzugt ist der bimetallische Precursor eine Verbindung der Formel III

R⁴₂In(OR⁵)₃Sn (III)

wobei R⁴ und R⁵ wie vorstehend definiert sind.

Die Erfindung betrifft außerdem ein Verfahren zu Herstellung von ITO-Beschichtungen. Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Das Verfahren enthält mindestens folgende Schritte:
a) Herstellen einer Zusammensetzung aus mindestens einer Indium-Verbindung und mindestens einer bimetallischen Verbindung, welche Indium- und Zinn enthält;
b) Auftragen der Zusammensetzung auf ein Substrat;
c) Temperaturbehandlung bei über 300 °C.

Als Zusammensetzung wird eine erfindungsgemäße Zusammensetzung verwendet, welche vorstehend beschrieben wurde.

Zum Auftragen können dem Fachmann bekannte Verfahren zur Beschichtung von Oberflächen verwendet werden. Bevorzugt sind Spin- Dip- oder Rollcoating oder Sprüh-Verfahren. Entsprechend der gewünschten Methode des Auftragens kann die Zusammensetzung unterschiedliche Konzentrationen der Precursorzusammensetzung enthalten. Bevorzugt ist eine Konzentration von 0.15 bis 0.6 M bezogen auf die Gesamtkonzentration aus Indium-Verbindung und bimetallischer Verbindung.

In einem weiteren Schritt wird die Beschichtung bei über 300 °C einer Temperaturbehandlung unterworfen.

Die Temperaturbehandlung kann in einer Weiterbildung der Erfindung nach dem bekannten Verfahren der Kristallisation (Calcinierung) und Reduktion erfolgen. Dazu wird die Beschichtung zunächst für mehrere Stunden, meistens ca. 12 Stunden, bei über 300 °C, meistens ca. 500 °C, an Luft behandelt. Dies führt wie schon beschrieben zur Oxidation zu Sn⁴⁺-Verbindungen.

In zweiten Schritt der Temperaturbehandlung wird eine Temperaturbehandlung in einer reduzierenden Atmosphäre durchgeführt, ebenfalls bei über 300 °C, meistens für deutlich kürzere Zeit, ca. 30 Minuten. Dies ist erforderlich, um eine Überreduktion der Beschichtung zu verhindern. Als Atmosphäre können H₂ oder CO verwendet werden, bevorzugt ist eine N₂/H₂-Atmosphäre mit einem H₂-Anteil von 5-15 %.

In einer besonders bevorzugten Weiterbildung der Erfindung wird die Temperaturbehandlung in einem Schritt unter inerter Atmosphäre durchgeführt. Wie schon beschrieben, kommt es dabei zur Disproportionierung von Sn²⁺ und somit zur Ausbildung von Ladungsträgern in der ITO-Beschichtung. Als inerte Atmosphäre können N₂, CO₂ oder Edelgase verwendet werden, bevorzugt ist N₂. Die Temperatur sollte über 300 °C betragen, bevorzugt sind Temperaturen zwischen 300 und 800 °C, besonders bevorzugt zwischen 450 und 600 °C. Durch die inerte Atmosphäre können auch empfindlichere Substrate verwendet werden. Die Behandlung kann zwischen 2 und 48 Stunden betragen, bevorzugt zwischen 5 und 24 Stunden, besonders bevorzugt zwischen 8 und 15 Stunden.

In einer vorteilhaften Weiterbildung der Erfindung enthält die Zusammensetzung zusätzlich eine oder mehrere organische Verbindungen mit lewisbasischen Gruppen, wie bereits vorstehend beschrieben, bevorzugt sind C₁₋₆-Alkohole, Carbonylverbindungen, β-Hydroxyketone, β-Diketone, (Poly)ether.

Desweiteren betrifft die Erfindung ein Verfahren zur Herstellung eines ITO-Pulvers. Dieses ist analog zu dem vorstehend beschriebenen Verfahren zur Herstellung einer ITO-Beschichtung, wobei allerdings anstatt von Schritt b) die Zusammensetzung bei unter 100 °C getrocknet und danach einer Zerkleinerungsbehandlung unterworfen wird. Das Verfahren enthält daher folgende Schritte:
a) Herstellen einer Zusammensetzung aus mindestens einer Indium-Verbindung und mindestens einer bimetallischen Verbindung, welche Indium- und Zinn enthält;
b) Temperaturbehandlung der Zusammensetzung bei unter 100 °C und danach einer Zerkleinerungsbehandlung;
c) Temperaturbehandlung bei über 300 °C.

Bevorzugt wird eine erfindungsgemäße Zusammensetzung verwendet. Zur Herstellung eines ITO-Pulvers werden zunächst ggf. vorhandene weitere organische Verbindungen, wie z.B. Alkohole, durch Temperaturbehandlung bei unter 100 °C entfernt. Die erhaltene Zusammensetzung wird einer Zerkleinerungsbehandlung unterworfen. Dies umfasst dem Fachmann bekannte Techniken, wie beispielsweise Mörser, Hartmörser, Mühlen, Das so zerkleinerte Pulver wird einer Temperaturbehandlung bei über 300 °C unterworfen. Dabei können wie vorstehend beschrieben einstufige oder zweistufige Verfahren verwendet werden.

Das erhaltene Pulver kann danach weiteren Zerkleinerungs- oder Dispergierbehandlungen unterworfen werden. Die Partikel können auch durch Zugabe von Oberflächenmodifikation oberflächenmodifiziert werden. Techniken dafür sind dem Fachmann bekannt.

Die erhaltenen Pulver weisen eine Kristallitgröße von unter 200 nm, bevorzugt unter 50 nm, besonders bevorzugt zwischen 10 und 15 nm auf.

Desweiteren betrifft die Erfindung Artikel enthaltend bzw. aufweisend eine Beschichtung die nach dem erfindungsgemäßen Verfahren erhalten wurde.

Dies sind alle dem Fachmann bekannten Verwendungen für ITO-Beschichtungen und ITO-Pulver. Dies betrifft insbesondere leitfähige und/oder transparente Beschichtungen in mikro- und/oder optoelektronischen Anwendungen. Die Beschichtungen eignen sich bspw. insbesondere als NIR-Absorber auf Oberflächen.

Als Anwendung seien beispielsweise genannt: Touch-Screens, Displaytechnologie, Elektroden.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Erfindung wird nun anhand einiger Ausführungsbeispiele erläutert. Die Ausführungsbeispiele sind in den Figuren schematisch dargestellt. Im Einzelnen zeigt:

In Tabelle 4 sind verschiedenen Verfahren und Zusammensetzungen aufgelistet, welche hergestellt wurden (Daa bedeutet Diacetonalkohol).
- Fig. 1: ¹H-NMR-Spektrum einer erfindungsgemäßen Precursorzusammensetzung mit 10 at% Sn;
- Fig. 2: Strukturformel von Me₂In(OtBu) ₃Sn;
- Fig. 3: Röntgendiffraktogramm (XRD) eine Beschichtung mit 10at% Sn aus 0.4M Lösung mit Temperung unter inerter Atmosphäre;
- Fig. 4: Röntgendiffraktogramm (XRD) eine Beschichtung mit 10at% Sn aus 0.4M Lösung mit Temperung mit zweistufiger Temperung;
- Fig. 5: Pulverdiffraktogramme von Pulvern 10at% Sn aus 0.4M Lösung getempert unter inerter Atmosphäre (a) und mit zweistufiger Temperung (b);
- Fig. 6: Analyse des Pulverdiffraktogramm eines Pulvers 10at% Sn aus 0.4M Lösung getempert unter inerter Atmosphäre; Kalibriert gegen Silizium;
- Fig. 7: Festkörper-NMR-Messung einer ungetemperten Probe.
- Fig. 8: Messung der Kristallitgrößen nach Scherrer;
- Fig. 9: TEM-Aufnahme eines unter inerter Atmosphäre hergestellten Pulvers;
- Fig. 10: TEM-Aufnahme eines im zweistufigen Verfahren hergestellten Pulvers;
- Fig. 11: Transmission verschiedener Beschichtungen auf Borosilikatglas;
- Fig. 12: Trübung verschiedener Beschichtungen auf Borosilikatglas;
- Fig. 13: Mikroskopische Aufnahmen (50x) verschiedener Beschichtungen (a: 0.2 M; b: 0.4 M; c: 0.2 M mit Daa; d: 0.4 M mit Daa; 12h bei 500°C unter Stickstoffatmosphäre)
- Fig. 14: UV-vis-NIR-Spektrum einer Probe Typ 11 (0.4 M) vor und nach der Reduktion;
- Fig. 15: UV-vis-NIR-Spektrum einer Probe Typ 15 im Vergleich zu einer Probe Typ 19;
- Fig. 16: UV-vis-NIR-Spektrum einer Probe mit 0.4 M Precursorkonzentration mit mehreren Beschichtungen;
- Fig. 17: UV-vis-NIR-Spektrum einer Probe gegen eine industriell hergestellte Beschichtung;
- Fig. 18: a) Mikroskopische Aufnahme einer Schicht: 0.2M und 10at% Sn mit tert.-Butanol anstelle von Daa; 12h bei 500°C unter Stickstoffatmosphäre);
b) Mikroskopische Aufnahme einer Schicht mit Kratzern nach Doppelbeschichtung (Beschichten, dann Tempern wie oben beschrieben und erneutes Beschichten und Tempern: 0.4M mit Daa und 10at% Sn; 12h bei 500°C unter Stickstoffatmosphäre);

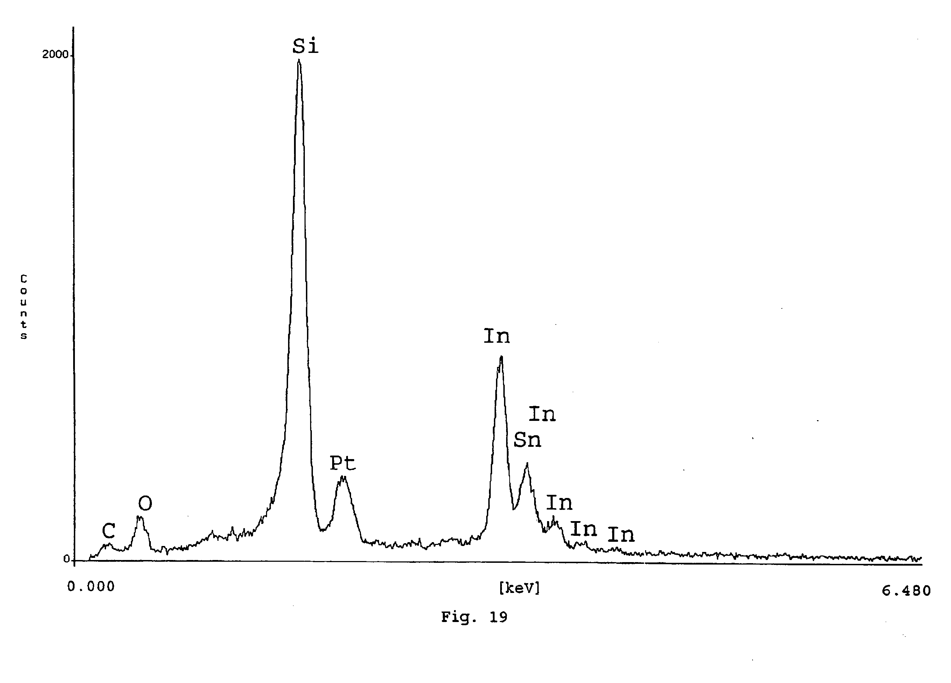

- Fig. 19: EDX-Spektrum einer ITO-Schicht mit 10at% Sn aus einer 0.4M Lösung auf Borosilikatglas; mit Pt-besputtert.

In einer bevorzugten Ausführungsform beträgt das molare In / Sn Verhältnis der Zusammensetzung 9/1. Dies ergibt eine Dotierkonzentration von ca. 5 - 10 at% Zinn (im Verhältnis [Sn] / ([Sn] + [In])), die eine gute elektrische Leitfähigkeit von ITO-Schichten gewährleisten können. Als Verbindungen werden als Indium-Verbindung bevorzugt Dialkylverbindungen eingesetzt, welche als dritten Rest einen Alkoxid-Rest aufweisen. Zusammen mit Zinn(II)alkoxid-Verbindungen ergibt sich folgendes Gleichgewicht:

R⁵₂InOR⁷ + Sn(OR⁷)₂ <-> R⁶₂In(OR⁷)₃Sn

Dabei ist R⁶ bevorzugt ein C₁ bis C₄ Alkylreste, besonders bevorzugt Methyl und R⁷ ein C₂ bis C₆ Alkylrest, besonders bevorzugt sterisch anspruchsvolle Reste, wie t-Butyl oder isoPropyl. So sieht das Gleichgewicht beispielsweise so aus:

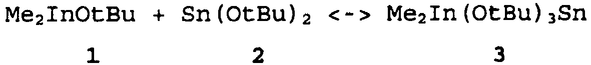

Die Zinn-Verbindung wird entsprechend ihrem Gehalt zugegeben. Durch die bereits angeführten Wechselwirkungen zwischen den Metallzentren und den Alkoxy-Gruppen kommt es zur Ausbildung der bimetallischen Verbindung 3. Diese Verbindung ist durchaus stabil. Dies zeigt sich darin, dass sich erst nach mehrstündigem Refluxieren in Toluol sich ein Gleichgewicht ausgebildet hat. Man erhält als Precursorzusammensetzung eine klare Flüssigkeit, die bei ca. 70°C im Vakuum destilliert werden kann.

Wird nun 1 und 2 in den gewünschten Verhältnissen eingesetzt (z.B. In/Sn 9:1), so wird das eingegebene Sn-Alkoxid 2 nahezu vollständig in die bimetallische Verbindung überführt. Die überschüssige Indium-Verbindung kann auf diese Weise zusammen mit der bimetallischen Verbindung durch Destillation gereinigt werden. Auch eventuell nicht umgesetzte Sn-Verbindung kann dabei beispielsweise durch Sublimation entfernt werden.

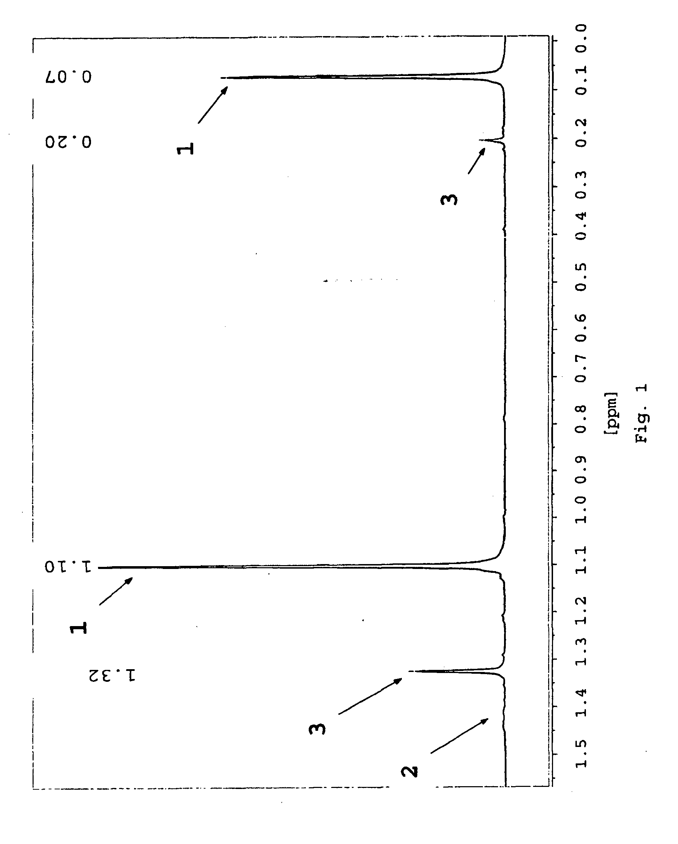

Anhand von NMR-Messungen (¹H, ¹³C, ¹¹⁹Sn) in Lösung konnte der Reaktionsverlauf verfolgt werden. Sind zu Beginn der Reaktion nur die Signale der Edukte 1 und 2 erkennbar, so stellt sich nach ca. 12h ein Reaktionsgleichgewicht ein, in dem in den NMR-Spektren die Signale des Indium-Edukts 1 (Signale bei 0.07 und 1.1 ppm) und die des Produkts 3 (Signale bei 0.2 und 1.32 ppm) mit nur minimalen Spuren von 2 zu erkennen sind (Fig. 1). Tabelle 1 zeigt die gemessenen NMR-Signale der bimetallischen Verbindung 3.

Das vorliegende Produktgemisch an 1 und 3 kann bei moderaten Temperaturen (ca. 70°) im Vakuum destilliert werden. Es liegt in Form von wachsartigen Anteilen vor, die bei 30°C aufschmelzen (überschüssiges Me₂InOtBu 1), und einer klaren, farblosen Flüssigkeit (3).

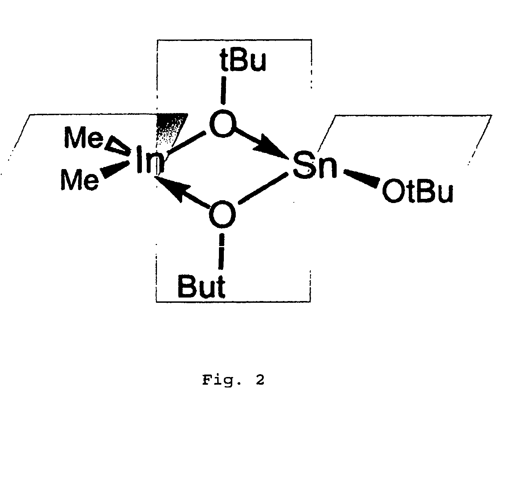

Die bimetallische Verbindung liegt als stabiler, aber dynamischer Komplex vor. Durch NMR-Messungen bei variablen Temperaturen (dynamische NMR-Messungen) und mit unterschiedlichen Verhältnissen der Verbindungen konnte die in Fig. 2 gezeigte Struktur bestätigt werden.

Die beiden endständigen Methylgruppen (links) liegen in einer Ebene zu der endständigen tert.-Butyl-Gruppe (rechts) und senkrecht zu den verbrückenden tert-Butylgruppen (Mitte). Die beiden Teile der In- und Sn- Edukte koordinieren jeweils zueinander und schaffen somit die gewünschte Verknüpfung von Sn-Komponente zur In-Komponente durch intramolekulare Wechselwirkungen.

Bei dynamischen NMR-Messungen mit unterschiedlichen Eduktverhältnissen (1 zu 2) stellte sich heraus, dass das gebildete Produkt 3 zusätzlich zu der intramolekularen Wechselwirkung wie oben beschrieben auch noch mit seiner Umgebung interagiert.

Bei einem überschüssigen Einsatz von 1, wie er für einen ITO-Precursor erforderlich ist (nur ca. 10at% Sn), tauschen die Me₂InOtBu-Gruppen die Koordinationsplätze zu dem Sn(OtBu)₂-Teil des Produktes untereinander aus. Die in Abb. 1 beschriebene Indium-Gruppe wird also ständig durch die umgebenen Indium-Gruppen ausgetauscht. Es liegt also eine intermolekulare Wechselwirkung vor.

Die erfindungsgemäße Precursorzusammensetzung erlaubt daher die Herstellung einer sehr stabilen und definierten Mischung, welche eine genaue Einstellung der Dotierung der späteren ITO-Schicht erlaubt. Diese liegt im Regelfall bei 5 bis 10 at% (relativ zur Gesamtmenge an Metallen) für ITO.

Die Konzentration an Zinn kann nach dem Syntheseprozess und der anschließenden Reinigung durch Destillation mittels Atomabsorptionsspektroskopie (GF-AAS: Graphite Furnace-Atomabsorptionsspektrometrie) gemessen werden.

Die bimetallische Verbindung kann außerdem rein erhalten werden, indem beispielsweise die Reaktion mit einem Überschuss (z.B. 5:1) an Zinnverbindung durchgeführt wird und die erhaltene bimetallische Verbindung durch Destillation gereinigt wird.

Die NMR-Signale entsprechen der Verbindung, welche im Gemisch mit der Indium-Verbindung erhalten wird. NMR-Charakterisierung der bimetallischen Verbindung.

### Herstellung der Precursorzusammensetzung:

Um die gewünschte Dotierkonzentration des Zinn zu erhalten, muss die Sn-Verbindung in entsprechendem Metallverhältnis (In/Sn) zu der Indium-Verbindung zugegeben werden, z.B. 6at%, 8at%, 10at% und 50at% Sn. In dem entstandenen Produkt ist nach der Refluxierung in Toluol eine entsprechende Menge Indium-Verbindung und der bimetallischen Verbindung enthalten, welche zusammen destilliert werden.

### Herstellung der Zusammensetzung für Beschichtungen

Die Precursorzusammensetzung mit der gewünschten Dotierkonzentration an Zinn wird in (getrocknetem) Isopropanol gelöst, so dass eine Konzentration von 0.6M erhalten wird.

Aus dieser werden durch Zugabe von weiterem Isopropanol, Diacetonalkohol, tert.-Butanol und/oder Acetylaceton Lösungen von 0.2M und 0.4M Konzentration hergestellt und unter Stickstoff gelagert.

### Herstellen der Beschichtungen

Eine Zusammensetzung entsprechend vorstehender Vorschrift wird die Lösung zwei Stunden im Beschichtungslabor gerührt, um eine optimale Homogenität zu erhalten und um die Temperatur der Lösung an die Umgebung anzugleichen. Anschließend wird die Beschichtungslösung durch einem Spritzenfilter (Größe 8) geleitet, um etwaige Feststoffe abzufiltrieren.

### Spin-Coating

Die hergestellte Zusammensetzung wird durch Rotationsbeschichtung aufgetragen (spin-coating). Es werden pro Beschichtung 7µl Zusammensetzung in die Mitte auf das ruhende Glassubstrat getüpfelt und anschließend ein definiertes Beschichtungsprogramm durchlaufen (Rotationsgeschwindigkeit: 1000rpm; Rotationsdauer: 20s). Anschließend wird der noch nasse Lösungsfilm mind. eine Minute ruhen gelassen, um eine gleichmäßige Trocknung zu gewährleisten.

### Temperaturbehandlung in zwei Schritten

Die beschichteten Substrate werden in einem Luftofen für 12h bei 500°C getempert (flach liegend). Nachdem die Proben abgekühlt sind, werden sie in einem horizontalen Kieselglas-Rohrofen für 30 Minuten bei 300°C in einer Formiergasatmosphäre (N₂/H₂ = 92/8) reduziert.

### Temperaturbehandlung unter Inertatmosphäre

Die Schichten werden nach dem Beschichtungsprozess in den Rohrofen gegeben und für 12h bei 500°C mit N₂-Spülung getempert (50 1/h).

Das im obigen Abschnitt erläuterte Precursorsystem wurde in ersten Versuchen mit einem Metallverhältnis In/Sn von 9/1 synthetisiert und in Isopropanol gelöst. Dies entspricht einer effektiven Zinndotierung des fertigen Oxids von 10at%. Zur besseren Schichtausbildung wurden unterschiedliche Anteile von Diacetonalkohol hinzugegeben. Der Einsatz von Acetylaceton erwies sich hingegen als nicht förderlich.

Die nachstehend dargestellten Ergebnisse beziehen sich alle auf den Einsatz eines Precursorsystems mit 10at% Sn als Dotiermittel. Um die Dotierkonzentration zu variieren muss in diesem Fall lediglich die Menge an zugeführtem Zinnedukt zur Precursorsynthese variiert werden.

Die unterschiedlichen Temperprozesse (Temperung + Reduzierung und Temperung unter Inertgas) wurden durchgeführt, um vergleichende Daten zwischen der herkömmlichen Herstellungsmethode (mit Reduzierung) und der neu entwickelten Methode (Inertgastemperung) zu erhalten. Es wurden sowohl Schichten durch spin-coating hergestellt, als auch Pulverproben. Diese ermöglichen exaktere Messergebnisse z.B. bei XRD-Untersuchungen. Beide Probenarten wurden bei 500°C für 12h unter Stickstoffatomsphäre getempert.

Mehrfachschichten wurden durch wiederholtes Auftragen der Precursorlösung durch spin-coating und anschließender Temperung der erhaltenen Schichten hergestellt.

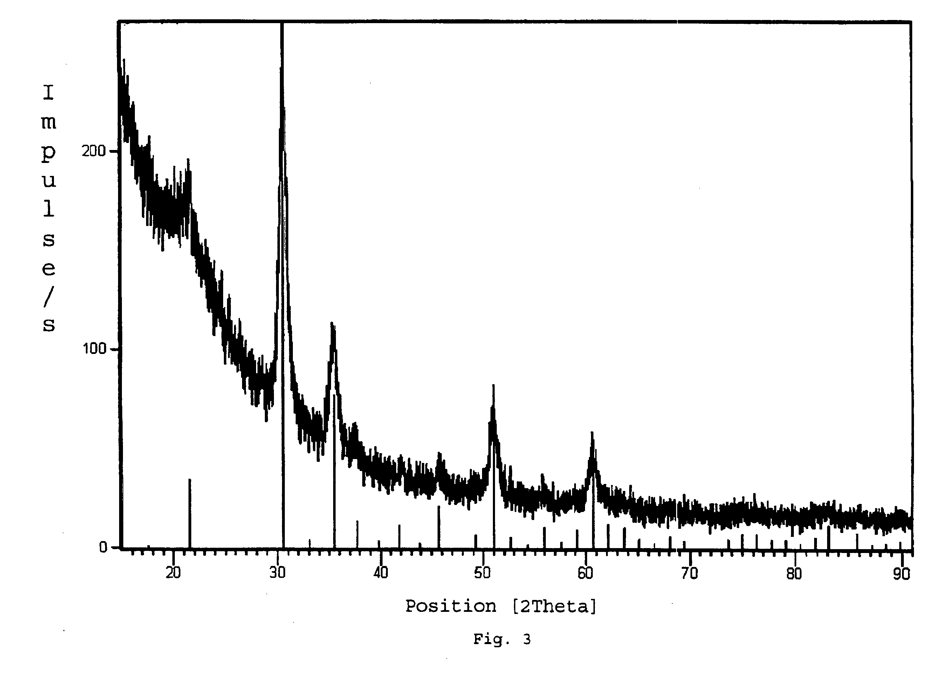

Diffraktogramme einer Schicht, welche 12h unter inerter Atmosphäre bei 500 °C getempert worden waren zeigt Figur 3 (10at% Sn aus 0.4M Lösung). Die Referenzlinien entsprechen den Signalen von Indiumoxid (In₂O₃; ICDD: 6-416). Es ist zu erkennen, dass alle Reflexe des Schichtmaterials dem Indiumoxid zugewiesen werden können und keine separierten Phasen zu erkennen sind.

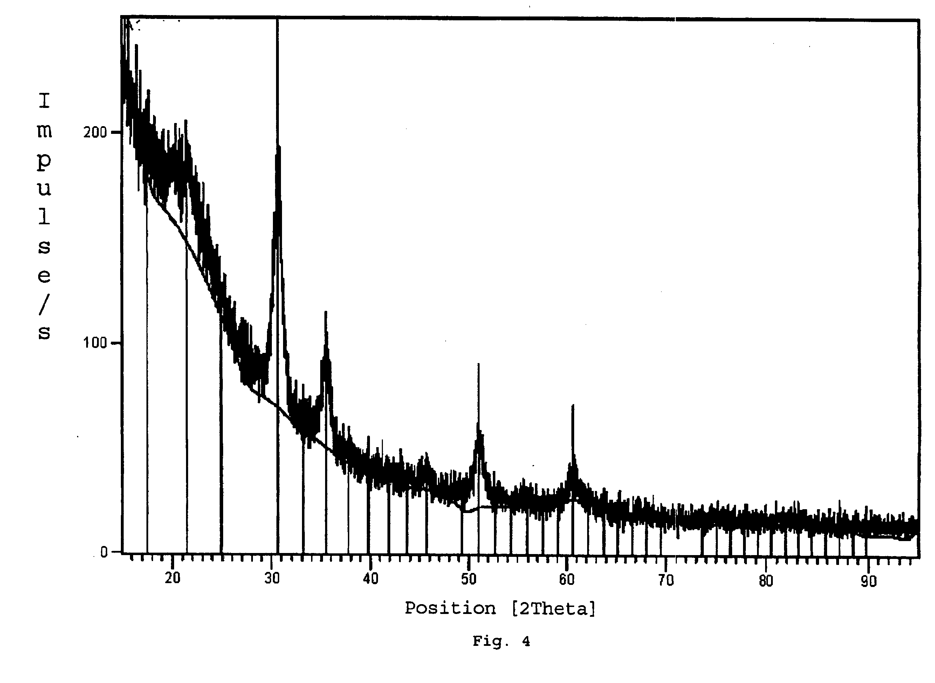

Eine Referenzprobe nach dem klassischen Herstellungsprozess (10at% Sn aus 0.4M Lösung; 12h bei 500°C an Luft und Reduzierung bei 300°C unter Formiergas mit 8% H₂) liefert ein identisches Pattern (Figur 4).

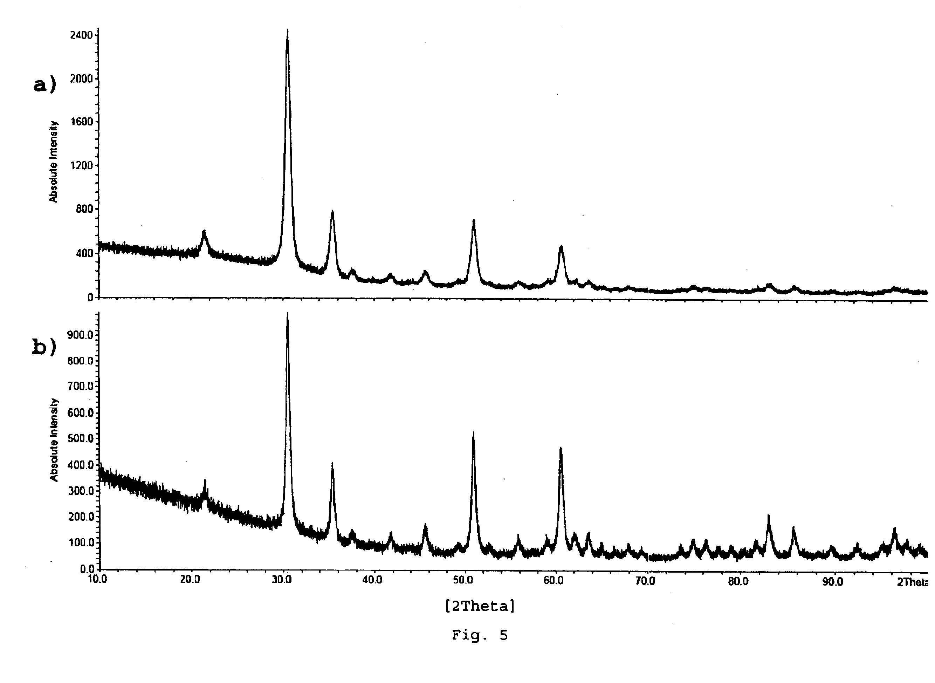

Gleiches gilt für entsprechend hergestellte Pulver (Figur 5).

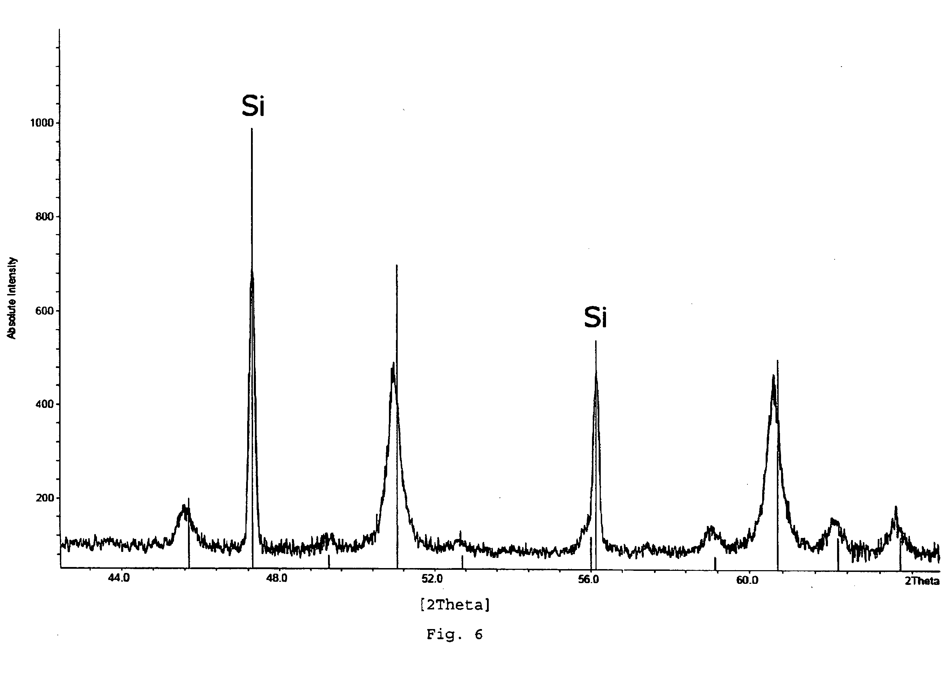

Eine genauere Analyse des Pulverdiffraktogramms eines unter inerter Atmosphäre getemperten Pulvers zeigt eine Verschiebung der gemessenen Signale im Vergleich zu den Referenzlinien des In₂O₃ (Figur 6). Hierzu wurde zur Pulverprobe Siliziumpulver (mit Si markierte Signale) zugegeben, um gerätbedingte Abweichungen auszugleichen (kalibrieren). Die gemessenen Reflexe des Pulvermaterials sind im Diffraktogramm alle nach links zu kleineren Beugungswinkeln hin verschoben, verglichen mit den blau eingezeichneten Referenzlinien von In₂O₃. Entsprechend des Braggschen Gesetzes entspricht dies einer Aufweitung des Oxidgitters nach der Dotierung mit Zinn und der anschließenden Temperung. Dies ist ein literaturbekanntes Phänomen bei ITO. Nach Vegards Gesetz müsste der substitutionelle Einbau von kleinen Sn⁴⁺-Ionen (0.69 Ä) auf die Plätze der wesentlich größeren In³⁺-Ionen (0.79 Å) zu einer Verringerung der Gitterkonstanten führen. Die Aufweitung des Gitter ist jedoch bedingt durch den Einfluss von überschüssigem Zinn in das Oxidgitter, interstitiellem Sauerstoff und den Einbau der größeren Sn²⁺-Ionen (0.93 Å).

Die Feinauflösung der Röntgendiffraktogramme zeigt ein typisches Verhalten der ITO-Proben, welche durch den neuartigen Prozess hergestellt wurden. Es liegt ein Indiumoxidgitter vor, in welches das Zinn substitutionell eingebaut ist. Durch überschüssigen Sauerstoff bzw. den Einbau von zweiwertigen Sn-Ionen weitet sich das Oxidgitter auf.

### Festkörper-NMR-Messungen

Um die Disproportionierungsreaktion des zweiwertigen Zinns genauer zu untersuchen, wurden Festkörper-NMR-Messungen durchgeführt. Dazu wurden zwei unterschiedliche Proben hergestellt:

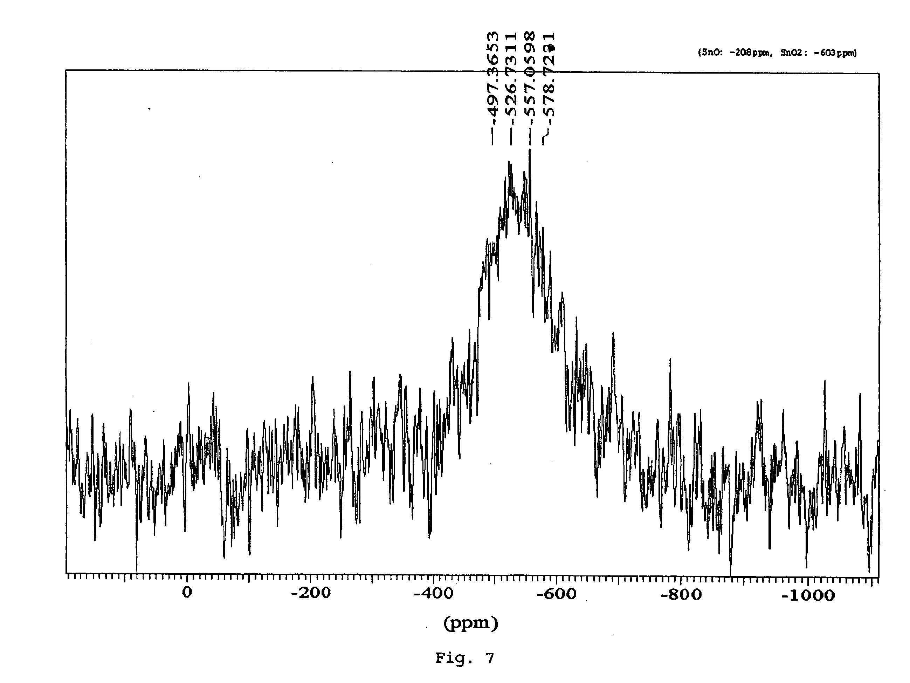

Eine ungetemperte Pulverprobe **P1** (Xerogel, Entfernung des Solvents unter rühren bei 50°C an Luft) und Pulvermaterial von **P1** nach 12 Stunden bei 500°C unter Stickstoff (**P2**). Figur 7 zeigt das Festkörper-NMR-Spektrum der ungetemperten Probe **P1**. Es ist ein breites Signal bei ca. -540 ppm erkennbar. Weitere Signale sind nicht zu erkennen. Die Signalbreite erklärt sich durch den amorphen Zustand der Probe. In der Ausgangsverbindung Me₂In(OtBu)₃Sn₃ liegt das Zinn zweiwertig vor (Sn^{II}). Durch die Abspaltung der Liganden durch Hydrolyse und den nachfolgenden Kondensationsschritt hat sich ein amorphes Netzwerk von Hydoxylionen gebildet, in dem noch ein erheblicher Anteil an organischen Ligandenresten und Lösungsmittel (Isopropanol) vorliegt. Das Sn²⁺-Ion liegt hierbei mehrfach koordiniert mit Hydroxylionen vor. Der Vergleichswert von reinem Zinn(II)-Monoxid (SnO) liegt bei ca. -208ppm. Die Abschirmung durch diese Hydroxylionen führt zu der Verschiebung des Sn²⁺-Signals nach rechts.

Eine Messung der zweiten Probe **P2** (nach Temperung unter N₂) zeigte ein paramagnetisches Verhalten des Materials, das die Entstehung von Resonanzsignalen verhindert. Dieses Verhalten belegt die zuvor beschriebene Disproportionierung des zweiwertigen Zinn der Ausgangsverbindung und im Xerogel zum vierwertigen Zinnion Sn⁴⁺ und zu metallischen Sn⁰:

2 SnO <-> Sn⁰ + SnO₂

Das vorliegende Sn⁰ liegt atomar verteilt im Material vor und zeigt bei den Schichten keine separaten Phasenbereiche oder Schwärzungen der Schicht.

Die Dicken der hergestellten Schichten (auch Mehrfachbeschichtungen) wurden mit einem Profilometer (INM) bestimmt. Tabelle 2 zeigt die gemessenen Schichtdicken, die mit unterschiedlichen Konzentrationen der Precursorlösung hergestellt wurden (0.2molar und 0.4molar in Isopropanol (HOiPr)).

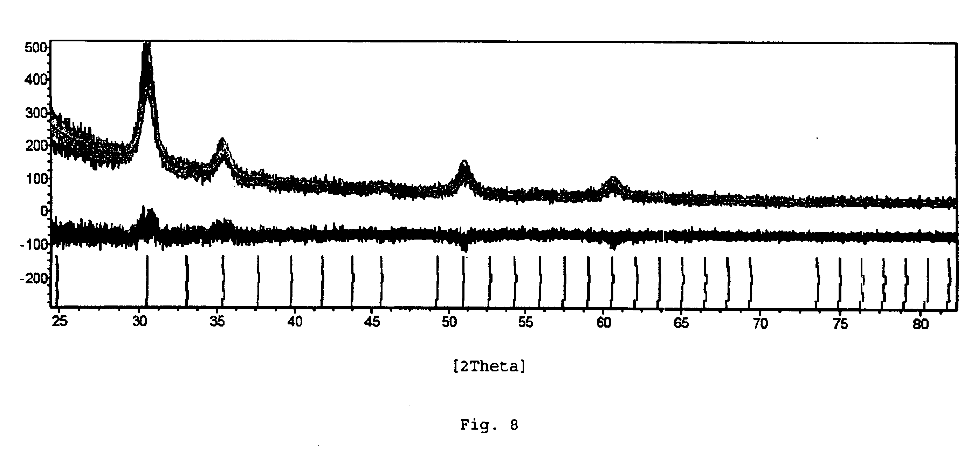

Die Kristallitgrößen des Schichtmaterials wurden mit der Scherrer-Methode abgeschätzt (Fig. 8, Tab. 3). Dazu wurden sechs Schichten vermessen und deren Werte gemittelt (2 Schichten mit 0.4M Lösung mit Daa, 2 Schichten aus 0.2M Lösung mit Daa und 1 Schicht mit 0.2M Lösung ohne Additiv (nur Isopropanol) und 1 Schicht mit 0.4M Lösung ohne Additiv (nur Isopropanol); Temperaturbehandlung: 12h bei 500°C unter N₂). Zwischen den unterschiedlichen Proben traten keine signifikanten Unterschiede auf.

Man kann erkennen, dass die Kristallitgrößen bei mehreren identisch hergestellten Proben eine homogene Verteilung im Bereich von ca. 10 nm aufweisen.

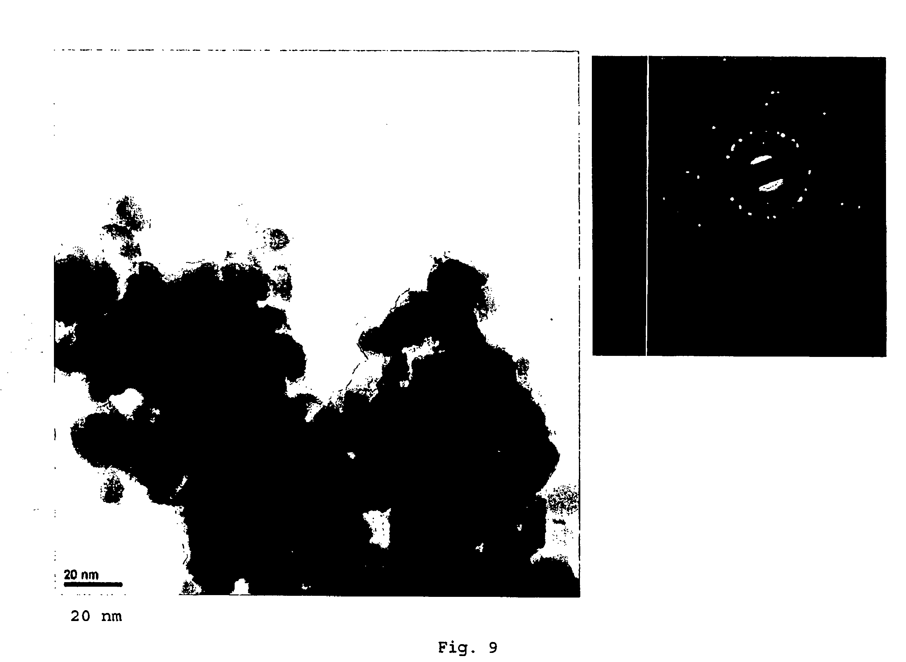

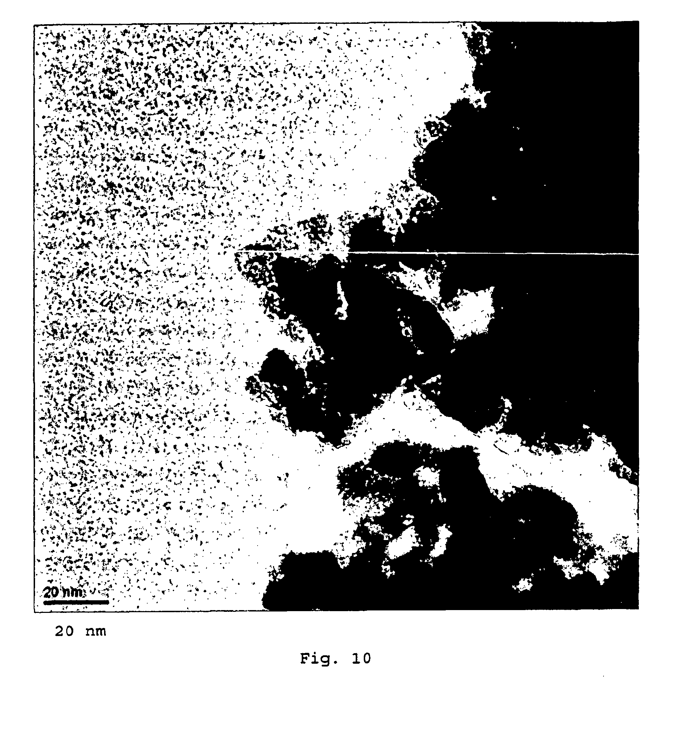

Diese Abschätzung deckt sich mit den Durchmessern der Pulverpartikel, welche mit TEM-Aufnahmen abgeschätzt wurden. Dabei weisen das unter inerter Atmosphäre hergestellte Pulver (Fig. 9) und das mit dem zweistufigen Verfahren hergestellte Pulver gleiche Morphologien auf (Fig. 10). Auch für die Pulver konnte eine Kristallitgröße von 10 bis 15 nm bestätigt werden. Das unter inerten Bedingungen hergestellte Pulver ist kristallin (Beugungsmuster in Fig. 9).

Der stöchiometrische Anteil des Zinn in der Precursorlösung (hier: reines Isopropanol) wurde mittels Atomabsorptionsspektroskopie ermittelt und bestätigt die eingegebene Menge an Zinnedukt (**2**).

Der Kohlenstoffanteil des Xerogels in Pulverform (nach abdampfen des Solvents bei 50°C an Luft) liegt entsprechend dem hohen Restgehalt an organischen Anteilen bei 33% und einem Anteil an Wasserstoff von ca. 5%.

Nach dem Tempern unter N₂-Atmosphäre (500°C, 12h) liegen folgende Werte der CHN-Analyse vor (C: 0.1-0.3 %; H 0 %, N 0 %) Die gemessenen Anteile an Kohlestoff in den Proben liegen dabei innerhalb der Messtoleranz des Gerätes (CHN-900 Elemental Analysator von LECOTM) und können durch adsorbierte Gasmoleküle und (CO₂) beeinflusst werden.

Eine nasschemische Bestimmung der Metallanteile (In+Sn) wurde mittels Titration (Komplexometrische Bestimmung mittels EDTA (Ethylendinitrilotetraessigsäure Dinatriumsalz (Dihydrat)) durchgeführt und belegen das erwartete Gesamtverhältnis der Metalle im Oxid.

Besonders hervorzuheben ist das Fehlen irgendwelcher weiteren Verunreinigungen durch Fremdatome (Halogene, Stickstoff, weitere Metalle etc.), da diese bereits durch den Syntheseprozess des Precursorsystems ausgeschlossen werden.

Des Weiteren ist auch kein Einbau von Stickstoff aus der Temperatmosphäre in das Material messbar.

### Optische Eigenschaften

Tabelle 4 zeigt die unterschiedlichen Proben, welche zur Untersuchung der optischen Eigenschaften hergestellt wurden. Dabei wurden für verschiedene Messungen zum Teil verschiedene Proben der gleichen Zusammensetzung und Herstellung verwendet (Daa: Diacetonalkohol).

Die mehrfachen Schichten wurden durch wiederholtes Auftragen der Zusammensetzung durch spin-coating mit anschließender Temperaturbehandlung nach jedem Beschichtungsschritt erhalten.

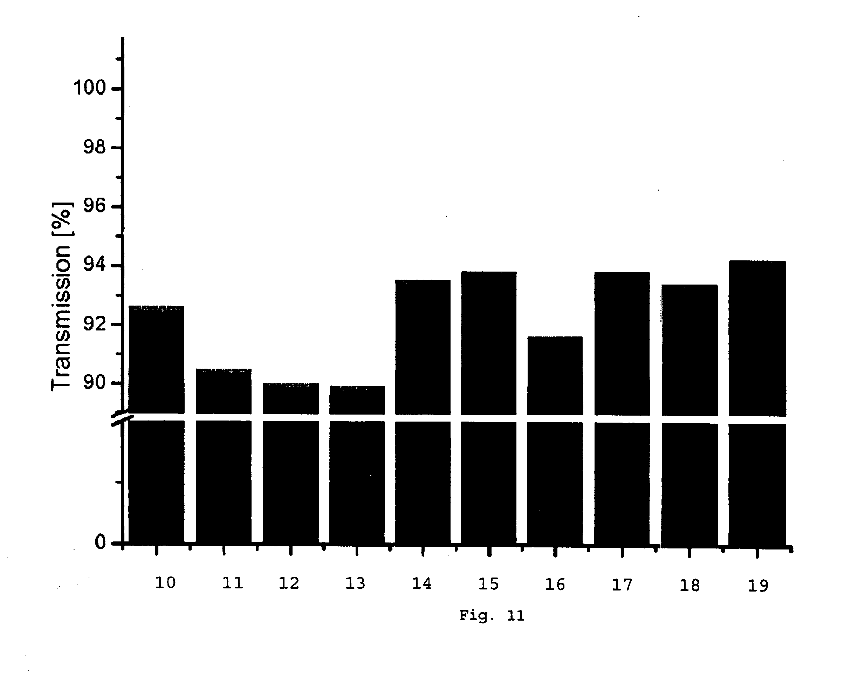

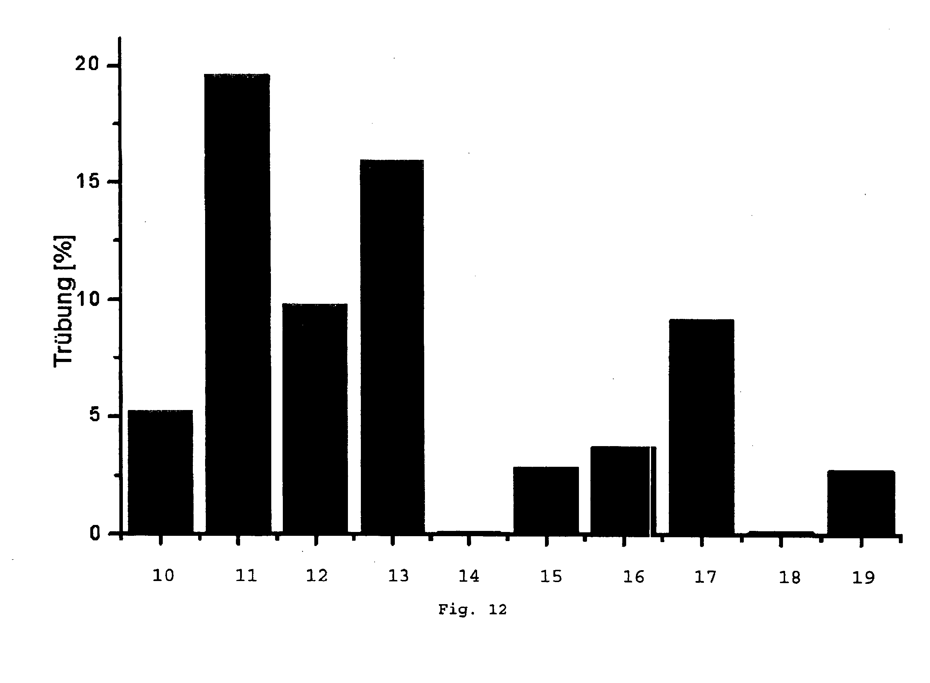

In den Figuren 11 und 12 ist die Transmission und Trübung verschiedener Proben angegeben. Die Zugabe von Daa führt zu einer deutliche Verbesserung der optischen Eigenschaften.

Die hergestellten Schichten weisen eine augenscheinliche Klarheit auf, die jedoch durch eine leichte milchige Trübung vermindert wird. Dieser Effekt ist umso stärker, je höher die Konzentration an Precursormaterial in der Lösung ist (meist wurden 0.2molare und 0.4molare Lösungen verwendet), je mehr Schichten aufgebracht wurden und je geringer der Anteil an Diacetonalkohol ist.

Die Transmissionswerte liegen bei allen Hergestellten Schichten (1x, 2x, 3x¬Beschichtung, mit 0.2 bis 0.4molarer Precursorkonzentration und mit Daa) bei über 90%. Dies spricht für eine sehr homogene Schichtausbildung. Weiterhin ist es ein weiteres Indiz dafür, dass das gebildete metallische Sn⁰ atomar verteilt im Schichtmaterial vorliegt und nicht etwaige Cluster bildet, die als Absorptions- und Streuzentren dienen könnten.

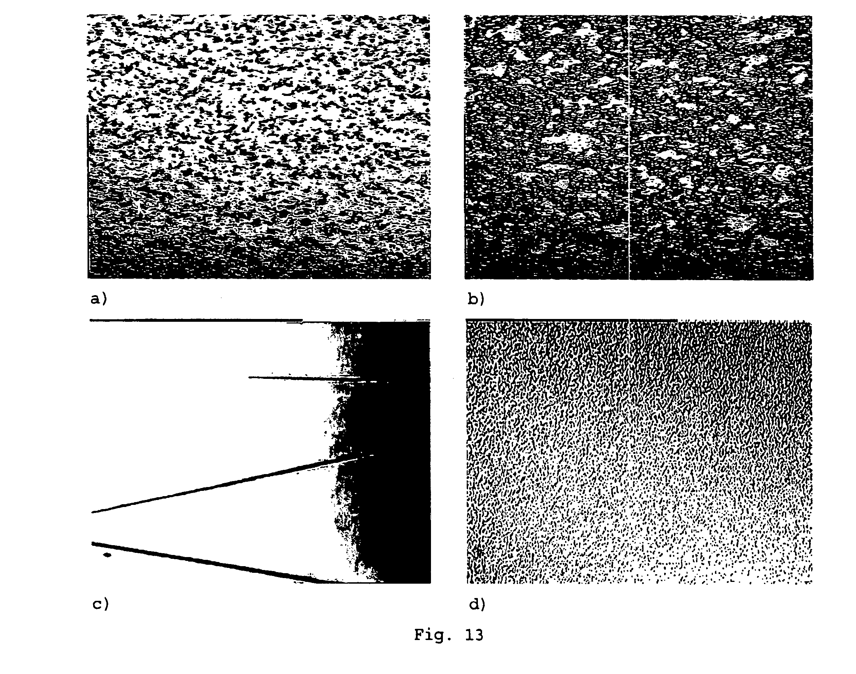

Figur 13 zeigt die mikroskopischen Aufnahmen (50-fach vergrößert) von Schichten mit unterschiedlicher Precursorkonzentration und Additivzugabe. Alle Proben wurden bei 500°C für 12h unter Stickstoff getempert und enthalten einen Sn-Anteil von 10at%. Bei den Proben ohne Additiv sind mikroskopische Inhomogenitäten zu erkennen (a, b). Durch die Zugabe von Diacetonalkohol wird eine deutliche Steigerung der Homogenität der Schichten erzeugt. Die Schichtoberfläche aus einer 0.4molaren Precursorlösung weist noch kleinere Unregelmäßigkeiten auf (d), die bei verdünnteren Ansätzen (0.2 molar) nicht zu erkennen sind (c). Um einen befriedigenden Kontrast zu erhalten, wurden mechanische Kratzer in die Schicht eingebracht.

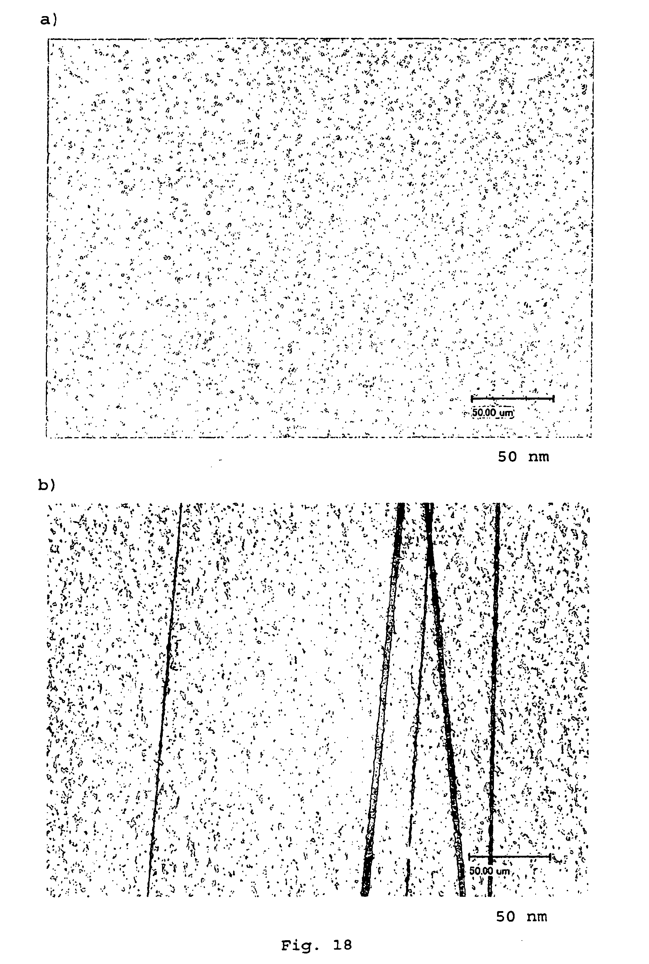

Ähnliche Aufnahmen mit einer Schicht hergestellt mit tert.-Butanol zeigt Figur 18.

### UV-vis-NIR-Messungen

Eine wesentliche Eigenschaft von ITO-Schichten ist die Transparenz im sichtbaren Bereich und die Reflexion von Infrarotstrahlung. Die Messungen wurden alle gegen Luft zur Basislinienkorrektur gemessen. Soweit nicht anders angegeben, handelt es sich um einfach beschichtete Proben.

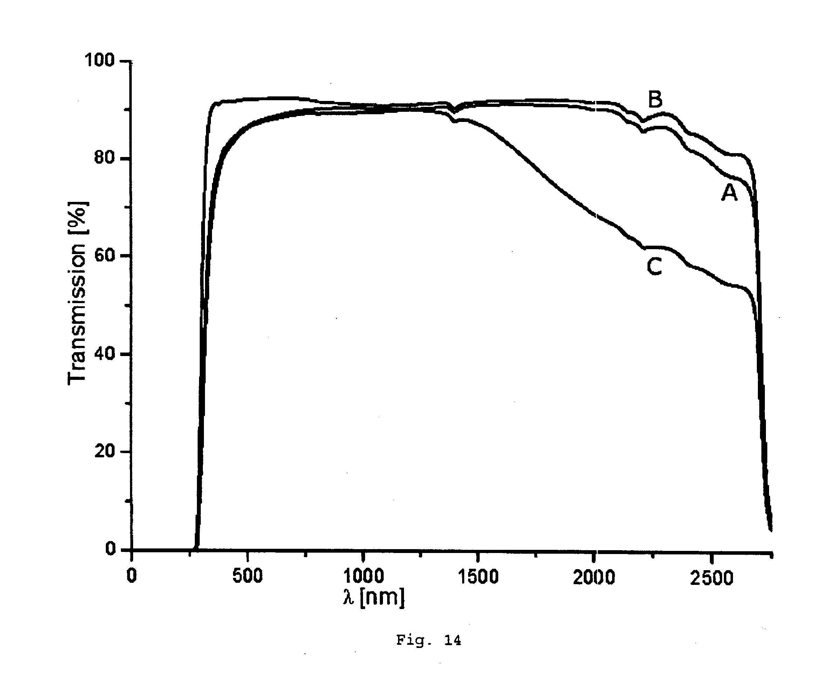

Figur 14 zeigt den Verlauf einer auf dem klassischen Weg (Tempern und Reduzieren) hergestellten Schicht mit der erfindungsgemäßen Zusammensetzung.

Nach der Beschichtung mit einer 0.4molaren Precursorlösung und dem Auskristallisieren an Luft (12h, 500°C, A) ist noch kein entscheidender Unterschied im Transmissionsverlauf zum reinen Substratglas ("Borofloat blank", B) zu erkennen. Nach dem Reduzieren bei 300°C unter Formiergas (30 Minuten, 8% H₂ in N₂, C) ist ein steiler Abfall der Transmission im nahen IR-Bereich zu erkennen.

Dieser Effekt an der sogenannten Plasmakante kann durch die Drude-Theorie beschrieben werden und ist ein Zeichen für die Bildung eines Elektronenplasmas der freien Leitungsbandelektronen. Die elektrischen und optischen Eigenschaften herkömmlicher ITO-Schichten (mit Reduzierschritt) werden dementsprechend erst beim Reduziervorgang durch die Bildung freier Elektronen erlangt.

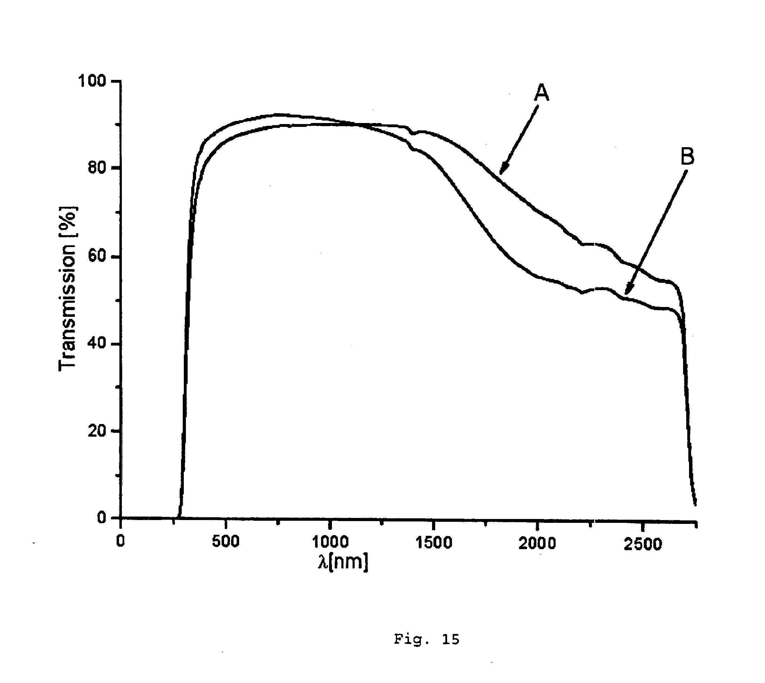

Figur 15 zeigt den Vergleich der Spektren einer entsprechend aufgebrachten Schicht (0.4molar + Daa) nach der klassischen Tempermethode (Probe Typ 15, **A**) und der direkten Stickstofftemperung (Probe Typ 19, **B**).

Es ist zu erkennen, dass die Plasmakante einer Stickstoffgetemperten Probe wesentlich steiler und tiefer verläuft, als die einer herkömmlich behandelten Probe nach 30minütiger Reduzierung (welches eine übliche Zeitspanne für diesen Prozessschritt ist, da sonst die Gefahr einer Überreduzierung entsteht). Weiterhin ist zu erkennen, dass die Bandkante (linker abfallender Bereich) nach der neuen Methode ebenfalls steiler erscheint.

Die Transmission im vis-Bereich der Probe nach N₂-Temperung ist ebenfalls augenscheinlich.

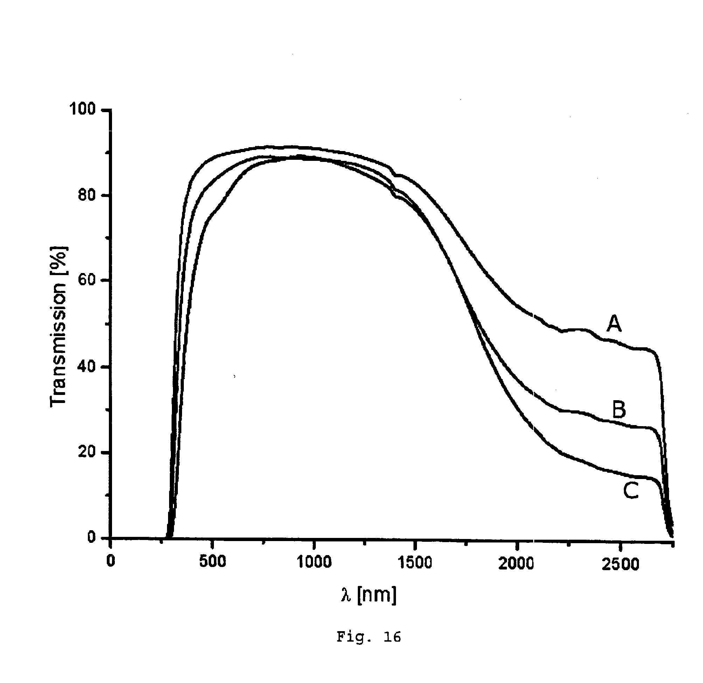

In Figur 16 sind die Unterschiede in den Transmissionsverläufen nach Mehrfachbeschichtungen von Proben mit 0.4 M Precursorkonzentration (Daa, 10 at% Sn, 12h 500 °C, N₂) zu erkennen (A: 1 Schicht; B: 2 Schichten; C: 3 Schichten).
Wie zu erwarten verläuft die Plasmakante mit steigender Beschichtungszahl (und somit steigender Schichtdicke) immer steiler. Dies liegt an der erhöhten Anzahl an freien Ladungsträgern, die durch ein größeres Schichtvolumen nach Mehrfachbeschichtungen aktiviert werden.

Die Transmission im sichtbaren Bereich verringert sich bei diesen Proben und mit dieser Messtechnik lediglich von ca. 92% auf ca. 88%.

Bei einem Vergleichswert von 550nm sinkt die Transmission von 90% für eine Einfachschicht auf ca. 80% bei einer Dreifachschicht. Ein erheblicher Teil dieser Transmissionsminderung ist auf die erhöhte Trübung der Schichten nach mehrmaligem Beschichten zurückzuführen.

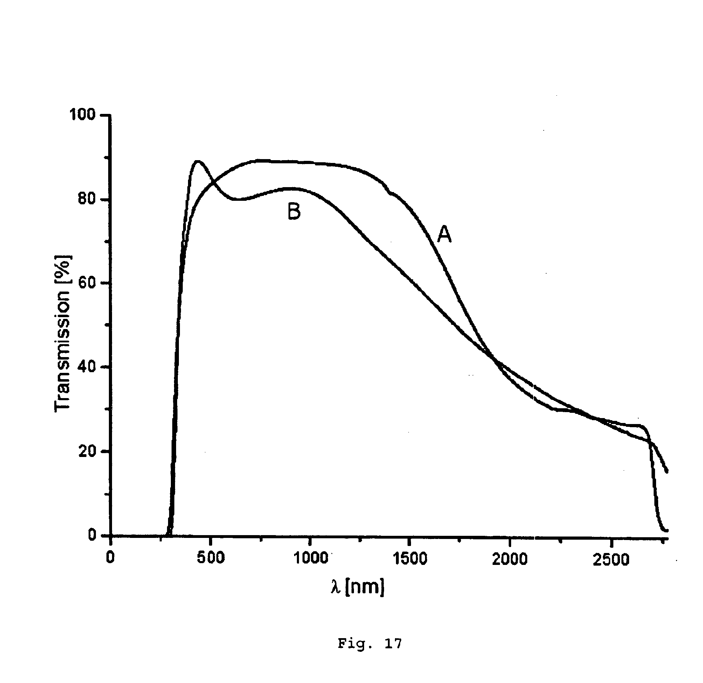

In Figur 17 ist der Transmissionsverlauf einer doppelt beschichteten Probe (2x 0.4molar, N₂-Temperung, Daa , **A**) gegen eine industriell angefertigte ITO-Schicht von Donnelly (Seit 2002: Magna Mirror Systems International Inc., **B**) dargestellt. Die Schicht wurde durch einen Sputterprozess auf Floatglas (Kalk-Natron-Glas) aufgetragen und weist eine Dicke von 105 nm auf.

Der steilere Abfall der Transmissionskurve der Donnelly-Probe deutet auf eine höhere Konzentration freier Ladungsträger im Material hin. Die Transmission im sichtbaren Bereich (ca. 400 - 700nm) ist sehr unterschiedlich ausgeprägt und bei der von uns hergestellt Schicht deutlich gleichmäßiger und in ihrem Maximum höher mit einem wesentlich steileren Verlauf der Plasmakante.

### Elektrische Leitfähigkeit

Die elektrischen Eigenschaften der ITO-Schichten wurden mit der 4-Punkt-Messmethode untersucht. Sie geben den Flächenwiderstand der Schicht in Ωsq wieder. Durch Multiplikation mit der Schichtdicke (in cm) ergibt sich der spezifische Widerstand der Schicht in Ωcm.

In Tabelle 5 ist eine Übersicht der erzielten Werte abgebildet, die über diesen neuen Prozess zur Herstellung von ITO-Schichten bisher erreicht wurden:

Die Transmissionswerte wurden mit Hilfe eines kombinierten Transmissions-, Trübungs- und Klarheitsmessgerät (Transmission, Haze, Clarity; INM) ermittelt.

Es ist deutlich der Abfall der Flächenwiderstände bei steigender Schichtdicke (Mehrfachbeschichtung) und höherer Precursorkonzentration in der Beschichtungslösung erkennbar. Die Werte für eine Doppelschicht (3,88 x 10⁻³ Ωcm) sind durchaus akzeptabel. Die Transmission nimmt dabei nur unwesentlich ab.

Bemerkenswert ist die Konstanz der Transmissionswerte der unterschiedlichen Schichten. Diese bleiben sowohl bei höheren Precursorgehalten bei der Beschichtung, als auch bei Mehrfachschichten kaum verändert.

### Experimente

Im Folgenden werden die detaillierten Daten und Vorgehensweisen beschrieben, die im Rahmen der Syntheseprozesse durchgeführt werden müssen. Dabei wird jeder Syntheseschritt einzeln aufgelistet und beschrieben.

Aufgrund der hohen Hydrolyse- und Oxidationsempfindlichkeit der verwendeten Verbindungen wurden alle Darstellungsarbeiten in einer modifizierten Stock schen Vakuumapparatur unter getrocknetem, nachgereinigten Stickstoff durchgeführt (Trockenkolonnen mit Magnesiumperchlorat, Phosphorpentoxid und ABC-Katalysator).

Die verwendeten Lösungsmittel wurden durch Refluxieren über Natrium getrocknet, destilliert und unter Stickstoffatmosphäre über Natriumdraht gelagert.

### Synthese von InCl₃

### [G. Brauer: Handbuch der Präparativen und Anorganischen Chemie, Band II, F. Enke Verlag, Stuttgart, 1978]

Metallisches Indiumgranulat (Aldrich, 99.999%) wird in einem Schmelztiegel in ein Reaktionsrohr gegeben, welches nach Herstellen eines Vakuums (Entfernen der Umgebungsluft) mit Stickstoffgas gespült wird. Anschließend wird das Rohr mit Chlorgas geflutet und das Indiumgranulat mit einem Rohrofen auf 300°C erhitzt. Das Chlorgas wird vor dem Einleiten zur Trocknung durch eine Spülflasche mit konz. Schwefelsäure geleitet. Durch eine Transportreaktion verbindet sich das geschmolzene/dampfförmige Indium mit dem Chlor zu Indium-(III)-Chlorid (InCl₃) und fällt durch den Chlorgasstrom abseits des Schmelztiegels als weißes, kristallines Pulver aus. Nach Beendigung der Reaktion und Abkühlen des Reaktionsrohrs wird das noch verbleibende Chlorgas mit Stickstoff entfernt. Das gebildete InCl₃ kann unter inerten Bedingungen (N₂) in einem Auffangkolben gesammelt werden.

### Synthese von Me₂InCl

### [H.C. Clark, A.L. Pickard, J. Organometal. Chem., 1967, 8, 427 - 434]

Zu einer Suspension von Indium-(III)-Chlorid (InCl₃) in Diethylether wird unter ständigem Rühren die doppelte stöchiometrische Menge an Methyllithium (1.6M in Diethylether, Aldrich) langsam zugetropft und die Reaktionslösung 2 Tage lang bei Raumtemperatur gerührt. Nach Abfiltrieren des LiCl-Niederschlags und Entfernen des Lösungsmittels unter reduziertem Druck wird das verbleibende Produkt bei 110°C im Vakuum sublimiert.

### Synthese von Li(OtBu)

### [H. Nekola, F. Olbrich, U. Behrens, Z. Anorg. Allg. Chem. 2002, 628, 2067 - 2070]

Zu einer Lösung von tert.-Butanol in Hexan tropft man langsam tert.-Butyllithium (2.5M in Hexan, äquimolar, Aldrich) hinzu und lässt das entstehende Butan entweichen. Nach einer Stunde kochen unter Rückfluss wird das Lösungsmittel eingeengt und der verbleibende weiße Feststoff bei 120°C im Vakuum sublimiert.

### Synthese von Me₂In(OtBu)

### [z.B. O.T. Beachley Jr., D.J. MacRae, M.R. Churchill, A.Y. Kovalevski, E.S. Robirds, Organometallics, 2003, 22, 3991 - 4000]

Zu einer Lösung von Me₂InCl in Diethylether tropft man unter ständigem rühren eine äquimolare LiOtBu-Lösung in Diethylether und rührt das Reaktionsgemisch für 12 Stunden. Nach Abfiltrieren des LiCl-Niederschlags wird das Lösungsmittel unter reduziertem Druck entfernt und der verbleibende, wachsartige Feststoff bei 35°C durch Sublimation direkt in einen Auffangkolben überführt ("Flask-to-Flask-Sublimation").

### Synthese von LiN(SiMe₃)₂

### [U. Wannagat, H. Niederprüm, Chem. Ber. 1961, 94, 1540]

Eine Lösung von tert.-Buthyllithium (1.6M in Hexan, Aldrich) wird zu einer äquimolaren Menge von 1, 1, 1, 3, 3, 3- Hexamethyldisilazan (Aldrich) zugetropft und das entstehende Butan entweichen lassen. Nach zwei Stunden Kochen unter Rückfluss wird die Reaktionslösung 24 Stunden bei -30°C gelagert. Nach Ausbildung von Kristallen wird das überschüssige Lösungsmittel entfernt und die Kristalle im Vakuum getrocknet.

### Synthese von Sn(N(SiMe₃)₂)₂

### [M. Veith, Angew Chem 1975, 87, 287 - 288]

Zu einer Lösung von LiN(SiMe₃)₂ in Diethylether wird Zinn-(II)-Chlorid (SnCl₂, Aldrich) in halbem stöchiometrischem Verhältnis zugegeben, wodurch sich die Lösung rot färbt. Nach 4h rühren wird von LiCl-Niederschlag abfiltriert und das Lösungsmittel abgezogen. Das verbleibende Produkt wird anschließend bei 130°C im Vakuum destilliert.

### Synthese von Sn(OtBu)₂

### [M. Veith, F. Töllner, J. Organomet. Chem. 1983, 246, 219]

Zu einer Lösung von Sn(N(SiMe₃)₂)₂ in Toluol wird bei Raumtemperatur die doppelte stöchiometrische Menge an tert.-Butanol zugetropft, wodurch sich die vormals rote Lösung entfärbt. Nach zwei Stunden rühren wird das restliche Lösungsmittel zusammen mit dem verbliebenen Hexamethyldisilazan unter reduziertem Druck entfernt und der verbleibende weiße Rückstand bei 60°C sublimiert.

### Synthese von Me₂In(OtBu)₃Sn

Zu einer Lösung von Me₂InOtBu in Toluol wird eine Lösung von Sn(OtBu)₂ in Toluol zugetropft und die Reaktionslösung 12 Stunden unter Rückfluss gekocht. Nach Entfernen des Lösungsmittels unter reduziertem Druck wird das verbleibende Produkt bei 70°C im Vakuum destilliert.

### Herstellung einer Precursorzusammensetzung mit 10at% Sn

Es werden 6.39g Me₂InOtHu in 80ml Toluol gelöst. In einem zweiten Kolben löst man 0.86g Sn(OtBu)₂ in 30ml Toluol und tropft diese unter ständigem Rühren zur Me₂InOtBu-Lösung hinzu. Das Reaktionsgemisch wird 12 Stunden unter Rückfluss bei 110°C gerührt. Anschließend entfernt man das Lösungsmittel unter reduziertem Druck (10⁻³ mbar). Das verbleibende Produkt wird nun im Vakuum bei 70°C destilliert. Der Auffangkolben wird dabei mit einem Aceton-Trockeneis von außen gekühlt. Man erhält 6.595g Precursor (Massenausbeute: 91%)

### Herstellung einer Precursorzusammensetzung mit 6at% Sn

Es werden 2.624g Me₂InOtBu in 50ml Toluol gelöst. In einem zweiten Kolben löst man 0.204g Sn(OtBu)₂ in 25ml Toluol und tropft diese unter ständigem Rühren zur Me₂InOtBu-Lösung hinzu. Das Reaktionsgemisch wird 12 Stunden unter Rückfluss bei 110°C gerührt. Anschließend entfernt man das Lösungsmittel unter reduziertem Druck (10⁻³ mbar). Das verbleibende Produkt wird nun im Vakuum bei 70°C destilliert. Der Auffangkolben wird dabei mit einem Aceton-Trockeneis von außen gekühlt. Man erhält 2.554g Precursor (Massenausbeute: 90,3%)

### Herstellung einer Zusammensetzung für Beschichtungen (0.4M Precursorzusammensetzung; 10at% Sn mit Diacetonalkohol)

Es werden 6.595g Precursor (10at% Sn) in 50ml Isopropanol aufgelöst und gerührt, um eine 0.5923 molare Stammlösung zu erhalten. Anschließend entnimmt man 2ml der Lösung und gibt 0.96ml Diacetonalkohol (Daa) hinzu, damit man eine 0.4M Precursorlösung erhält.

### Vorbereitung der Substrate

Zugeschnittene Glassubstrate aus Borosilikatglas (Schott, Borofloat33, Dicke: 3 mm, 60 x 60 mm²) wurden durch Aufschlämmung von Ceroxidpulver poliert und anschließend in einer Laborspülmaschine gereinigt, wobei als letzter Spülgang mehrfach mit deionisiertem Wasser gespült wird.

### Beschichtung eines Borofloat-Substrates mit Zusammensetzung (0.4M Precursorzusammensetzung; 10at% Sn; Daa)

Man rührt die Beschichtungslösung für zwei Stunden bei Raumtemperatur und filtriert die Lösung mit einem Spritzenfilter. Das Glassubstrat wird durch Unterdruck auf dem Chuck des Spincoaters fixiert. Mit einer Pipette entnimmt man 0.7µl der Beschichtungslösung und gibt sie auf die Mitte des Substrats. Anschließend lässt man das Substrat für 20 Sekunden bei 1000rpm rotieren, wodurch sich die Beschichtungslösung gleichmäßig auf dem Substrat verteilt. Nach Beendigung des Rotiervorgangs löst man die Unterdruckfixierung des Substrats und lässt die nasse Schicht ruhen, bis der Lösungsfilm angetrocknet ist. Anschließend kann die Probe in horizontaler Lage verbleibend im Ofen getempert werden.

### Temperaturbehandlung in zwei Schritten

Die beschichteten Substrate werden in einem Luftofen für 12h bei 500°C getempert (flach liegend). Nachdem die Proben abgekühlt sind, werden sie in einem horizontalen Kieselglas-Rohrofen für 30 Minuten bei 300°C in einer Formiergasatmosphäre (N₂/H₂ = 92/8) reduziert.

### Temperaturbehandlung unter Inertatmosphäre

Die Schichten werden nach dem Beschichtungsprozess in den Rohrofen gegeben und für 12h bei 500°C mit N₂-Spülung getempert (50 1/h).

### Herstellung einer Pulverprobe aus einer 0.4M Beschichtungslösung (10at% Sn + Daa)

Aus einer 0.4M Precursorzusammensetzung entnimmt man 30ml und gibt diese in ein Becherglas. Unter ständigem rühren wird das Lösungsmittel bei 50°C an Luft entfernt. Anschließend wird das entstandene Pulver mit einem Hartmörser gemahlen und in einem Pulvertiegel in den Ofen gegeben und mit einem der vorstehend beschriebenen Temperaturbehandlungen behandelt.

### Liste der zitierten Literatur:

G. Brauer: Handbuch der Präparativen und Anorganischen Chemie, Band II, F. Enke Verlag, Stuttgart, 1978
H.C. Clark, A.L. Pickard, J. Organometal. Chem., 1967, 8, 427 - 434
H. Nekola, F. Olbrich, U. Behrens, Z. Anorg. Allg. Chem. 2002, 628, 2067 - 2070
O.T. Beachley Jr., D.J. MacRae, M.R. Churchill, A.Y. Kovalevski, E.S. Robirds, Organometallics, 2003, 22, 3991 - 4000
U. Wannagat, H. Niederprüm, Chem. Ber. 1961, 94, 1540
M. Veith, Angew Chem 1975, 87, 287 - 288
M. Veith, F. Töllner, J. Organomet. Chem. 1983, 246, 219

**Tabelle 1**

| ¹H [ppm] | ¹³C [ppm] | ¹¹⁹Sn [ppm] |
|---|---|---|
| 1.33 | 71.73 | - 168.25 (C₆D₆) |
| 0.08 | 33.57 | |
| | 0.40 | |

**Tabelle 2**

| Precursor-Konz. | Schichtdicke [nm] |
|---|---|
| 0.2M | 33 - 36 |
| 0.4M | 150 - 160 |

| Doppelschichten | |
|---|---|
| 0.2M | 160 - 170 |
| 0.4M | 220 - 260 |

**Tabelle 3**

| Precursorkonzentration | Additive | Temperung | Schichten | Phase Name | Kristallitgröße [nm] |
|---|---|---|---|---|---|
| 0.4M | Daa | 1 stufig | 1 | Bixbyite | 10 |
| 0.4M | - | 1 stufig | 1 | Bixbyite | 9 |
| 0.2M | Daa | 1 stufig | 1 | Bixbyite | 11 |
| 0.2M | Daa | 1 stufig | 1 | Bixbyite | 11 |
| 0.4M | Daa | 1 stufig | 1 | Bixbyite | 10 |
| 0.2M | - | 1 stufig | 1 | Bixbyite | 10 |

**Tabelle 4**

| Probe | [Precursorzusammensetzung] | Additive | Schichten | Temperung |
|---|---|---|---|---|
| 10 | 0.2 M | - | 1 | 2 stufig |
| 11 | 0.4 M | - | 1 | 2 stufig |
| 12 | 0.2 M | - | 2 | 2 stufig |
| 13 | 0.4 M | - | 2 | 2 stufig |
| 14 | 0.2 M | Daa | 1 | 2 stufig |
| 15 | 0.4 M | Daa | 1 | 2 stufig |
| 16 | 0.2 M | Daa | 2 | 2 stufig |
| 17 | 0.4 M | Daa | 2 | 2 stufig |
| 18 | 0.2 M | Daa | 1 | inert |
| 19 | 0.4 M | Daa | 1 | inert |

**Tabelle 5**

| Beschichtung | Schicht dicke [nm] | Flächenwiderstand | spez. Widerstand | Transmission (vis) |
|---|---|---|---|---|
| 0.2M + Daa nach N₂-Temperung | 33nm | 2800Ωsq | 9,24 x 10-3 Ωcm | 94% (+/-0,0) |
| 0.4M + Daa nach N₂-Temperung | 146nm | 317Ωsq | 4,63 x 10-3 Ωcm | 93,7% (+/-0,0) |
| Doppelbeschichtung (0.4M) N₂-Temperung | 224nm | 173,3 Ωsq | 3,88 x 10-3 Ωcm | 92,2 (+/-0,06) |

## Patentansprüche

1. Zusammensetzung zur Herstellung von ITO-Pulvern oder ITO-Beschichtungen, enthaltend
a) mindestens eine Indium-Verbindung der Formel InR¹₃, wobei R¹ gleich oder verschieden sein können und ausgewählt sind aus der Gruppe enthaltend geradkettige oder verzweigte Alkyl, Alkoxy und Carboxylreste, Halogenide, Amine, alkylierte Amine, und wobei die Reste auch untereinander verbunden sein können; und
b) mindestens eine bimetallische Verbindung, welche Indium- und Zinn enthält, wobei die bimetallische Verbindung eine Koordinationsverbindung einer Zinn-Verbindung mit einer Indium-Verbindung ist, in der lewisbasische Gruppen der Verbindungen eine koordinative Bindung zum jeweils anderen Metallzentrum eingehen, wobei die lewisbasischen Gruppen O, N oder S aufweisen.

2. Zusammensetzung nach Anspruch 1,
**dadurch gekennzeichnet, dass**
das Zinn in der bimetallischen Verbindung in der Oxidationsstufe +2 vorliegt.

3. Zusammensetzung nach einem der vorhergehenden Ansprüche,
**dadurch gekennzeichnet, dass**
die Indium-Verbindung eine Dialkylindiumverbindung ist.

4. Zusammensetzung nach einem der vorhergehenden Ansprüche
**dadurch gekennzeichnet, dass**
die Indium-Verbindung eine Verbindung der allgemeinen Formel (II)
R⁴₂InOR⁵ (II)
und die bimetallische Verbindung eine Verbindung der allgemeinen Formel (III)
R⁴₂In(OR⁵)Sn (III)
ist,
wobei R⁴ und R⁵ gleich oder verschieden sind und für einen linearen oder verzweigten Alkyl-Rest mit 1 bis 8 C-Atomen stehen.

5. Zusammensetzung nach einem der vorhergehenden Ansprüche,
**dadurch gekennzeichnet, dass**
die Zusammensetzung einen Anteil von 1 bis 50 at% Zinn ([Sn]/([Sn]+[In])) aufweist.

6. Zusammensetzung nach einem der vorhergehenden Ansprüche,
**dadurch gekennzeichnet, dass**
die Zusammensetzung zusätzlich eine oder mehrere organische Verbindungen mit lewisbasischen Gruppen enthält.

7. Zusammensetzung nach Anspruch 6,
**dadurch gekennzeichnet, dass**
die organischen Verbindungen ausgewählt sind aus der Gruppe C₁₋₆-Alkohole, Carbonylverbindungen, β-Hydroxyketone, β-Diketone, (Poly) ether.

8. Verfahren zur Herstellung von ITO-Beschichtungen enthaltend folgende Schritte:
a) Herstellen einer Zusammensetzung nach einem der Ansprüche 1 bis 7;
b) Auftragen der Zusammensetzung auf ein Substrat;
c) Temperaturbehandlung bei über 300 °C.

9. Verfahren nach Anspruch 8,
**dadurch gekennzeichnet, dass**
die Temperaturbehandlung unter inerter Atmosphäre durchgeführt wird.

10. Verfahren nach Anspruch 8,
**dadurch gekennzeichnet, dass**
die Temperaturbehandlung in zwei Stufen erfolgt, wobei der zweite Schritt in einer reduzierenden Atmosphäre durchgeführt wird.

11. Verfahren nach einem der Ansprüche 8 bis 10,
**dadurch gekennzeichnet, dass**
die Zusammensetzung zusätzlich eine oder mehrere organische Verbindungen mit lewisbasischen Gruppen enthält.

12. Verfahren nach Anspruch 11,
**dadurch gekennzeichnet, dass**
die organischen Verbindungen ausgewählt sind aus der Gruppe C₁₋₆-Alkohole, Carbonylverbindungen, β-Hydroxyketone, β-Diketone, (Poly)ether.

13. Verfahren zur Herstellung eines ITO-Pulvers nach einem der Ansprüche 8 bis 12,
**dadurch gekennzeichnet, dass**
anstatt von Schritt b) die Zusammensetzung bei unter 100 °C getrocknet und danach einer Zerkleinerungsbehandlung unterworfen wird.

14. Artikel enthaltend eine Beschichtung nach einem der Ansprüche 8 bis 12.

## Claims

1. A composition for producing ITO powders or ITO coatings, which comprises
a) at least one indium compound of the formula InR¹₃, where R¹ can be identical or different and R¹ is selected from the group consisting of straight-chain or branched alkyl, alkoxy and carboxyl radicals, halides, amines, alkylated amines, wherein the radicals can also be bound to one another; and
b) at least one bimetallic compound containing indium and tin, wherein the bimetallic compound is a coordination compound of a tin compound with an indium compound, in which Lewis-basic groups of the compounds form a coordinate bond to the other metal center, wherein the Lewis-basic groups comprise O, N or S.

2. The composition as claimed in claim 1, **characterized in that** the tin is present in the oxidation state +2 in the bimetallic compound.

3. The composition as claimed in any of the preceding claims, **characterized in that** the indium compound is a dialkylindium compound.

4. The composition as claimed in any of the preceding claims, **characterized in that** the indium compound is a compound of the general formula (II)
R⁴₂InOR⁵ (II)
and the bimetallic compound is a compound of the general formula (III)
R⁴₂In(OR⁵)₃Sn (III)
where R⁴ and R⁵ are identical or different and are each a linear or branched alkyl radical having from 1 to 8 carbon atoms.

5. The composition as claimed in any of the preceding claims, **characterized in that** the composition has a proportion of from 1 to 50 at% of tin ([Sn]/([Sn] + [In])).

6. The composition as claimed in any of the preceding claims, **characterized in that** the composition additionally contains one or more organic compounds having Lewis-basic groups.

7. The composition as claimed in claim 6, **characterized in that** the organic compounds are selected from the group consisting of C₁₋₆-alcohols, carbonyl compounds, β-hydroxyketones, β-diketones, (poly)ethers.

8. A process for producing ITO coatings, which comprises the following steps:
a) production of a composition composed according to any of the claims 1 to 7;
b) application of the composition to a substrate;
c) heat treatment at above 300°C.

9. The process as claimed in claim 8, **characterized in that** the heat treatment is carried out under an inert atmosphere.

10. The process as claimed in claim 8, **characterized in that** the heat treatment is carried out in two stages, with the second step being carried out in a reducing atmosphere.

11. The process as claimed in any of claims 8 to 10, **characterized in that** the composition additionally contains one or more organic compounds having Lewis-basic groups.

12. The process as claimed in claim 11, **characterized in that** the organic compounds are selected from the group consisting of C₁₋₆-alcohols, carbonyl compounds, β-hydroxyketones, β diketones, (poly)ethers.

13. The process for producing an ITO powder as claimed in any of claims 8 to 12, **characterized in that**, instead of step b), the composition is dried at below 100°C and then subjected to a comminution treatment.

14. An article containing a coating as claimed in any of claims 8 to 12.

## Revendications

1. Composition pour la préparation de poudres d'ITO ou de revêtements en ITO, contenant
a) au moins un composé de l'indium de formule InR¹₃, les radicaux R¹ pouvant être identiques ou différents et étant choisis dans le groupe contenant les radicaux alkyle, alcoxy ou carboxyle linéaires ou ramifiés, les halogénures, les amines, les amines alkylées et les radicaux pouvant également être reliés les uns aux autres ; et
b) au moins un composé bimétallique, qui contient de l'indium et de l'étain, le composé bimétallique étant un composé de coordination d'un composé d'étain avec un composé d'indium, dans lequel des groupes basiques de Lewis des composés entrent dans une liaison de coordination avec à chaque fois l'autre centre métallique, les groupes basiques de Lewis présentant O, N ou S.

2. Composition selon la revendication 1, **caractérisée en ce que** l'étain dans le composé bimétallique se trouve dans l'étage d'oxydation +2.

3. Composition selon l'une quelconque des revendications précédentes, **caractérisée en ce que** le composé d'indium est un composé de dialkylindium.

4. Composition selon l'une quelconque des revendications précédentes, **caractérisée en ce que** le composé d'indium est un composé de formule générale (III)
R⁴₂InOR⁵ (II)
et le composé bimétallique est un composé de formule générale (III)
R⁴₂In(OR⁵)₃Sn (III)
R⁴ et R⁵ étant identiques ou différents et représentant un radical alkyle linéaire ou ramifié comprenant 1 à 8 atomes de carbone.

5. Composition selon l'une quelconque des revendications précédentes, **caractérisée en ce que** la composition présente une proportion de 1 à 50% en atome d'étain ([Sn]/([Sn]+[In])).

6. Composition selon l'une quelconque des revendications précédentes, **caractérisée en ce que** la composition contient en outre un ou plusieurs composés organiques présentant des groupes basiques de Lewis.

7. Composition selon la revendication 6, **caractérisée en ce que** les composés organiques sont choisis dans le groupe formé par les C₁₋₆-alcools, les composés carbonyle, les ß-hydroxycétones, les ß-dicétones, les (poly)éthers.

8. Procédé pour la préparation de revêtements en ITO, comprenant les étapes suivantes
a) préparation d'une composition selon l'une quelconque des revendications 1 à 7 ;
b) application de la composition sur un substrat ;
c) traitement thermique à plus de 300°C.

9. Procédé selon la revendication 8, **caractérisé en ce que** le traitement thermique est réalisé sous atmosphère inerte.

10. Procédé selon la revendication 8, **caractérisé en ce que** le traitement thermique a lieu en deux étapes, la deuxième étape étant réalisée dans une atmosphère réductrice.

11. Procédé selon l'une quelconque des revendications 8 à 10, **caractérisé en ce que** la composition contient en outre un ou plusieurs composés organiques présentant des groupes basiques de Lewis.

12. Procédé selon la revendication 11, **caractérisé en ce que** les composés organiques sont choisis dans le groupe formé par les C₁₋₆-alcools, les composés carbonyle, les ß-hydroxycétones, les ß-dicétones, les (poly)éthers.

13. Procédé pour la préparation d'une poudre d'ITO selon l'une quelconque des revendications 8 à 12, **caractérisé en ce qu'**au lieu de l'étape b), la composition est séchée à moins de 100°C, puis soumise à un traitement par broyage.

14. Objet présentant un revêtement selon l'une quelconque des revendications 8 à 12.
